# EUROPEAN PATENT SPECIFICATION

(11) **EP 4 108 221 B1**
(45) Date of publication and mention of the grant of the patent: **21.05.2025**
(21) Application number: 21756769.2
(22) Date of filing: 09.02.2021
(51) Int. Cl.: A61H 1/02, A61H 3/00, B25J 11/00

(54) **WEARABLE MOTION ASSIST DEVICE**
AM KÖRPER TRAGBARE BEWEGUNGSHILFEVORRICHTUNG
DISPOSITIF PORTABLE D'ASSISTANCE AU MOUVEMENT

(30) Priority: 20.02.2020 JP 2020027617
(43) Date of publication of application: 28.12.2022
(73) Proprietor: CYBERDYNE INC., Tsukuba-shi, Ibaraki 305-0818 (JP)
(72) Inventor: HARA, Hiromasa, Tsukuba-shi, Ibaraki 305-0818 (JP); TAKAMA, Masahiro, Tsukuba-shi, Ibaraki 305-0818 (JP); WATARI, Hiroki, Tsukuba-shi, Ibaraki 305-0818 (JP)
(74) Representative: Mewburn Ellis LLP
(86) International application number: PCT/JP2021/004745
(87) International publication number: WO 2021/166739

(56) References cited:
- WO-A1-2012/044621
- WO-A1-2018/092325
- JP-A- 2006 115 971
- JP-A- 2006 115 971
- JP-A- 2006 204 426
- JP-A- 2014 054 273
- JP-A- 2014 054 273
- US-A1- 2004 102 723

## Description

### TECHNICAL FIELD

The present invention is suited for application to a wearable motion assistance device for assisting motions of, for example, a physically handicapped person who lost their muscular strength or an elderly person whose muscular strength has weakened, or for performing the motions on their behalf.

### BACKGROUND ART

In Japan, we are facing super-aging society where an aging rate continues increasing regardless of the tendency of a reduction of total population in Japan; and the number of people who receive certifications of needed nursing care or needed supports as they age is increasing every year more rapidly than an increase in the number of elderly people.

Since an elderly person's physical functions decrease and their walking function deteriorates as they age, a fall-down risk increases. When the elderly person falls down, they may not die, but external injuries, particularly bone fractures, caused by the falling down will have a significant impact on the physical functions and cause a serious problem which may lead to a bedridden state or a state requiring nursing care.

It has been conventionally believed that maintenance and enhancement of the physical functions by physical exercise are effective in preventing the falling down; and it is reported that balance training including walking and augmentation of the muscular strength can have not only the fall-down prevention effect, but also the effect of reducing bone fractures caused by the falling down.

However, regarding walking of an elderly person, shuffling gait, a stride length reduction and its resultant reduction in a walking speed, a forward-bent walking posture, and so on tend to easily appear as characteristic gait due to lowering of the muscular strength and flexibility of their body trunk and lower limbs and they can easily stumble over, for example, even a slight difference in level. Therefore, it is believed to be important to realize a proper walking posture and reduce the fall-down risk by assisting the diminished physical functions of the elderly person.

In recent years, there have been a wide spread of various power assist devices for assisting motions of physically handicapped persons who lost their muscular strength or elderly persons whose muscular strength diminished, or for performing the motions on their behalf. As these power assist devices, for example, there has been proposed a wearable motion assistance device capable of controlling and assisting physical exercises on the basis of a bioelectric potential associated with voluntary muscular activities according to a wearer's intention (see, for example, PTL 1).

PTL 2 discloses a wearable movement assisting device including a drive unit with a motor, a first transmission member, and a second transmission member. The motor is disposed at the side of a left knee joint of the wearer. The first transmitting member and second transmitting member are fastened to the left thigh and thin of the wearer through fastening members. A control signal for controlling the motor is generated on the basis of a signal detected by biological signal detection sensors.

PTL 3 discloses a method for controlling movement using an active powered device including an actuator, joint position sensor, muscle stress sensor, and control system. The device is designed for operation in several modes to provide either assistance or resistance to a muscle for the purpose of enhancing mobility, preventing injury, or building muscle strength.

PTL 4 discloses a thigh frame and a lower thigh frame that can be relatively moved in a fore and aft direction by meshing a thigh side gear arranged at the lower end of the thigh frame and a lower thigh side gear arranged at the upper end of the lower thigh frame, securing the housing of a knee joint actuator arranged coaxially with the axial line of the thigh side gear to the thigh frame, and moving the lower thigh side gear around the axial line by the rotor of the knee joint actuator and revolving it around the thigh side gear.

### CITATION LIST

### PATENT LITERATURE

PTL 1: Japanese Patent Application Laid-Open (Kokai) Publication No. 2005-253650
PTL 2: JP 2014 054273 A
PTL 3: US 2004/102723 A1
PTL 4: JP 2006 115971 A

### SUMMARY OF THE INVENTION

### PROBLEMS TO BE SOLVED BY THE INVENTION

Meanwhile, as some elderly persons do not want to use a cane, it seems that there seem to exist many elderly persons who have strong psychological resistance to wearing the wearable motion assistance device. So, it is necessary to reduce the weight of the entire device in order to reduce the elderly person's physical burdens.

Also, assuming a case where an elderly person sits on a chair or ride a vehicle in order for them to go out or spend daily life, it is important to downsize an amount of protrusions from their body not only on their lateral sides, but on their back side. Therefore, it is desirable that the wearable motion assistance device should be made as small and thin as possible and be designed in a clothing form close to everyday clothes.

Furthermore, it is highly desirable that the wearable motion assistance device should be made to perform motions corresponding to various joint sites of the wearer's body, not only the wearer's walking motions, but also their upper limb motions and lower back part motions.

The present invention was devised in consideration of the above-described circumstances and proposes a wearable motion assistance device which is intended to achieve relatively light weight, downsizing, and thinning and can be made to perform motions by positioning the device at a desired joint site(s) of the wearer's body.

### MEANS TO SOLVE THE PROBLEMS

In order to solve the above-described problems, there is provided according to the present invention a wearable motion assistance device as defined in claim 1.

As a result, with the wearable motion assistance device in the state where the drive unit is located on a lateral side of a joint of the wearer wearing clothes and the first and second frame units are fixed and retained respectively corresponding to the wearer's first and second body sites, a driving torque of the actuator according to motions of the wearer's joint can be transmitted as an assist force to the first and second body sites without giving any physical burdens or hindrances in daily life to the wearer.

Moreover, the present invention is designed so that the physical quantity detector detects an absolute angle, a rotation angle, an angular velocity, angular acceleration, and a driving torque between the first and second housings as the physical quantity regarding the rotary motion between the first and second housings.

Furthermore, the present invention is designed so that: the first and second coupling parts of the drive unit have rotary shafts along a direction vertical to an output axis of the speed reducer; and the frame unit and the communication unit are coupled to the drive unit so that they can freely rotate about the rotary shafts of the first and second coupling parts.

As a result, with the wearable motion assistance device, the drive unit, the frame unit, and the communication unit can be mounted on the wearer in accordance with the shapes of the first and second body sites around the wearer's joint.

Furthermore, the present invention is designed so that the drive unit has a flat-shaped actuator, an actuator driver which performs drive control of the actuator, a speed reducer which converts a rotational speed of a rotor for the actuator into a specified speed reduction ratio and outputs the converted rotational speed, and a flat-shaped operating unit including a touch sensor; and a main body of the speed reducer and the actuator driver are housed in either one of the first or second housing to be substantially flush with each other and the operating unit is fixed to the main body of the speed reducer so that the actuator is located between the main body and the operating unit; and an output axis of the speed reducer is fixed to the other one of the first or second housing.

Consequently, by making the drive unit for the wearable motion assistance device as small and thin as possible, it becomes possible to make the wearer wear the wearable motion assistance device without giving them any physical burdens even in the state where the wearer is wearing clothes.

Furthermore, the present invention is designed so that each of the first and second frame units and the power source unit is formed so that a thickness of its housing is thinner than a thickness of the first and second housings which constitute the drive unit and engage with each other.

Consequently, by thinning all the frame unit, the communication unit, and the power source unit for the wearable motion assistance device with reference to the thick ness of the drive unit, it becomes possible to make the wearer wear the wearable motion assistance device without giving them any physical burdens even in the state where the wearer is wearing clothes.

Furthermore, the present invention is designed so that either one or both of the first and second frame units can be adjusted in a freely expandable and contractible manner in a direction of coupling to the coupling part. As a result, by adjusting the length of the wearable motion assistance device in accordance with the wearer's body site, it is possible to make the wearable motion assistance device perform motions by positioning the device at a desired joint site in the wearer's body.

Furthermore, there is also provided according to the present invention a wearable motion assistance device as defined in claim 6.

As a result, with the wearable motion assistance device in the state where the drive unit is located on a lateral side of a joint of the wearer wearing clothes and the communication unit and the frame unit are fixed and retained respectively corresponding to the wearer's first and second body sites, a driving torque of the actuator according to motions of the wearer's joint can be transmitted as an assist force to the first and second body sites without giving any physical burdens or hindrances in daily life to the wearer.

### ADVANTAGEOUS EFFECTS OF THE INVENTION

According to the present invention as described above, it is possible to realize the wearable motion assistance device which can reduce physical loads on the wearer, who is wearing clothes, as much as possible and can be made to perform motions by positioning the device at a desired joint site(s) in the wear's body.

### BRIEF DESCRIPTION OF DRAWINGS

Fig. 1 is an external configuration diagram of a wearable motion assistance device according to a first embodiment;
Fig. 2 is an external configuration diagram illustrating first and second frame units shown in Fig. 1;
Fig. 3 is an exploded view illustrating the configuration of a drive unit for the wearable motion assistance device shown in Fig. 1;
Fig. 4 is an external configuration diagram illustrating a communication unit and a power source unit which are integrated together;
Fig. 5 is a transparent diagram illustrating an internal configuration of the communication unit and the power source unit which are shown in Fig. 4;
Fig. 6 is a block diagram illustrating an internal system configuration of the wearable motion assistance device;
Fig. 7 is an external configuration diagram of a wearable motion assistance device according to a second embodiment;
Fig. 8 is an exploded view illustrating the configuration of a drive unit for the wearable motion assistance device shown in Fig. 7;
Fig. 9 is a transparent diagram illustrating an internal configuration of a coupling part of the drive unit shown in Fig. 8;
Fig. 10 is an external configuration diagram illustrating a variation of an appearance design of the wearable motion assistance device according to the second embodiment;
Fig. 11 is a schematic diagram illustrating a combination of the wearable motion assistance device shown in Fig. 7 and a suspension-belt-type corset;
Fig. 12 is a schematic diagram illustrating a state of a wearer wearing a device composed of the combination in Fig. 7;
Fig. 13 is an external configuration diagram illustrating a variation of an appearance design of the wearable motion assistance device according to the second embodiment;
Fig. 14 is a schematic diagram illustrating a combination of the wearable motion assistance device shown in Fig. 13 and a suspension-belt-type corset;
Fig. 15 is a schematic diagram illustrating a state of the wearer wearing a device composed of the combination in Fig. 13;
Fig. 16 is an external configuration diagram illustrating a variation of a frame unit (a lower back belt) for the wearable motion assistance device according to the second embodiment;
Fig. 17 is a schematic diagram illustrating a state of the wearer wearing a device including the frame unit in Fig. 16;
Fig. 18 is a schematic diagram illustrating a state of the wearer wearing the wearable motion assistance device shown in Fig. 13 at their ankles;
Fig. 19 is a schematic diagram illustrating a state of the wearer wearing the wearable motion assistance device shown in Fig. 7 on their upper arm;
Fig. 20 is a schematic diagram illustrating a combination of the wearable motion assistance devices shown in Fig. 1 and Fig. 7 and a suspension-belt-type corset;
Fig. 21 is a schematic diagram illustrating a state of the wearer wearing a device composed of the combination in Fig. 20;
Fig. 22 is an external configuration diagram illustrating a state where the communication unit and the power source unit which are integrated together are added;
Fig. 23 is an external configuration diagram illustrating an upper-body-type frame unit for a wearable motion assistance device according to another embodiment;
Fig. 24 is an exploded configuration diagram illustrating a combination of the wearable motion assistance devices according to the first and second embodiments;
Fig. 25 is a schematic diagram illustrating a state of the wearer wearing a device composed of the combination shown in Fig. 24;
Fig. 26 is a schematic diagram illustrating an application example of the combination of the wearable motion assistance devices according to the first and second embodiments;
Fig. 27 is a schematic diagram illustrating an application example of the combination of the wearable motion assistance devices according to the first and second embodiments;
Fig. 28 is a schematic diagram illustrating an application example of the combination of the wearable motion assistance devices according to the first and second embodiments;
Fig. 29 is an external configuration diagram illustrating a variation of an upper-body-type frame unit for a wearable motion assistance device according to another embodiment; and
Fig. 30 is a schematic diagram illustrating an application example of a combination of a plurality of wearable motion assistance devices when the wearer's body size is very small.

### DESCRIPTION OF EMBODIMENTS

An embodiment of the present invention will be described below in detail with reference to the drawings.

### (1) Configuration of Wearable Motion Assistance Device According to First Embodiment

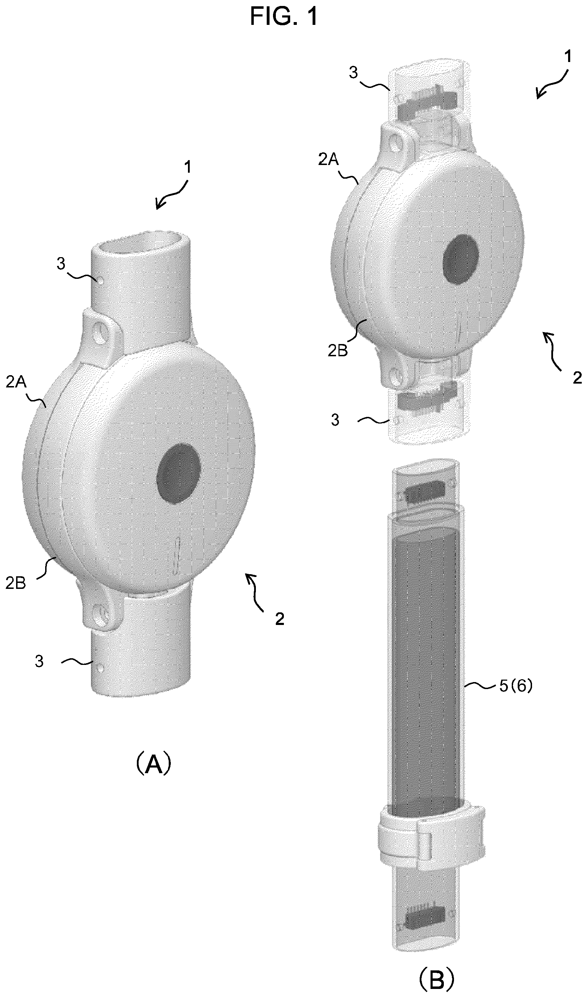

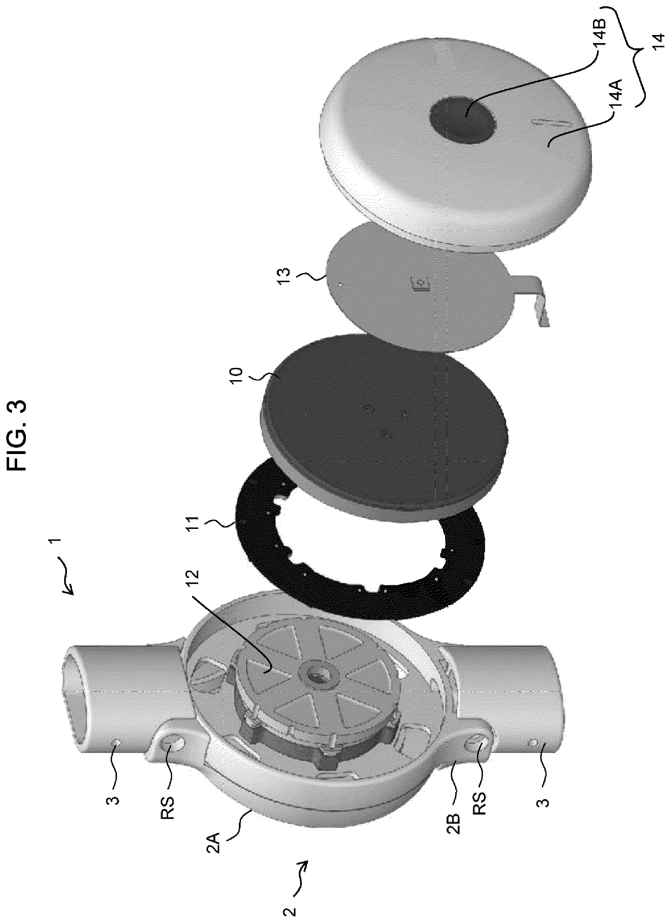

Fig. 1(A) and Fig. 1(B) illustrate a wearable motion assistance device 1 according to a first embodiment. With the wearable motion assistance device 1, a drive unit 2 has first and second housings 2A, 2B in which a stator side and a rotor side of an actuator 10 (Fig. 3) are respectively housed and which engage with each other so that they rotate separately according to driving of the actuator 10; and coupling parts of the same structure are formed to protrude from the first and second housings 2A, 2B respectively in mutually opposite directions.

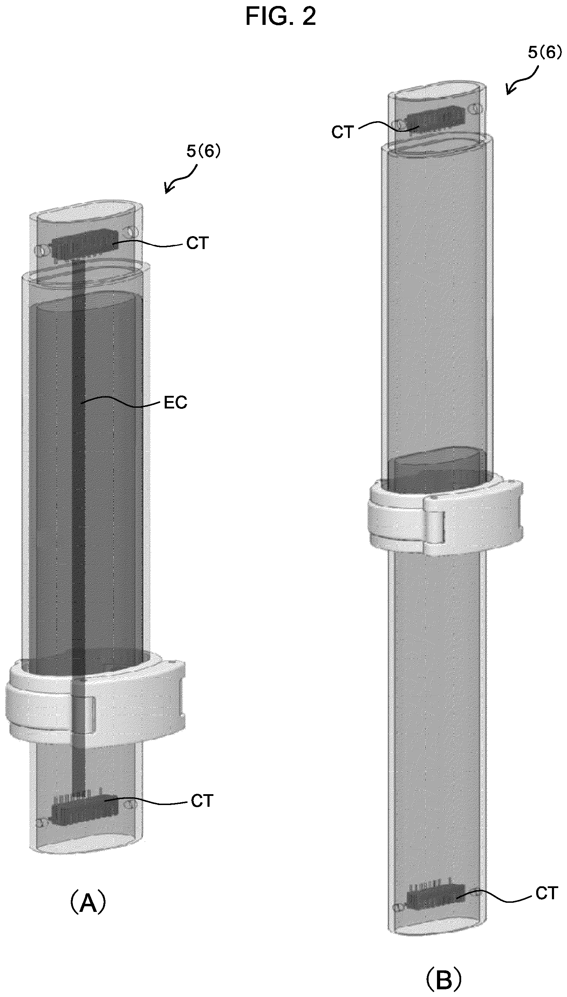

First and second frame units 5, 6 are coupled in a separable manner to the respective coupling parts 3 of this drive unit 2 (Fig. 2(B)). These first and second frame units 5, 6 can be adjusted in a manner freely expandable and contractible in a direction coupling to their corresponding coupling parts 3 as illustrated in Fig. 2(A) and Fig. 2(B). As a result, the wearable motion assistance device 1 can be made to perform motions by positioning the device at a desired joint site in a wearer's body by adjusting the length to the wearer's body site.

Furthermore, one end and the other end of each of the first and second frame units 5, 6 is provided with a connector CT of a specified structure and such connectors CT are electrically connected to each other by a freely-flexible extender cable EC through the inside of the frame.

The drive unit 2 includes, as illustrated in Fig. 3, a flat-shaped actuator 10 which is composed of, for example, a brushless DC motor, an actuator control unit 11 which performs drive control of the actuator 10, a speed reducer 12 which converts a rotational speed of a rotor for the actuator 10 into a specified speed reduction ratio and outputs it, and a flat-shaped operating unit 14 including a touch sensor 13.

An MCM (Multi-Chip Module) which is equipped with a CPU (Central Processing Unit), a memory, and so on is built in the actuator control unit 11.

The operating unit 14 is composed of a touch panel 14A which configures a housing surface, and a power source button 14B at the center of the housing; and the content of operations on the touch panel 14A through a finger touch by the wearer is reflected, as a detection result of the touch sensor 13, in the actuator control unit 11 and the power is turned on or off as the power source button 14B is pressed.

In the drive unit 2, a main body of the speed reducer 12 and the actuator control unit 11 are housed in either one of the first or second housing 2A, 2B to be substantially flush with each other; the operating unit 14 is fixed to the main body of the speed reducer 12 so that the actuator 10 is placed between them; and an output axis of the speed reducer 12 is fixed to the other one of the first or second housing 2A, 2B.

By making the drive unit 2 as small and thin as possible as described above, it becomes possible to make the wearer wear the device without giving them any physical burdens even in a state where the wearer is wearing clothes.

Each coupling part 3 of the drive unit 2 has a rotary shaft RS in a direction vertical to the output axis of the speed reducer 12 and each of the first and second frame units 5, 6 is coupled in a freely rotatable manner about the rotary shaft RS of its corresponding coupling part 3.

Moreover, a connector having a specified structure (not shown in the drawing) is built in each coupling part 3 of the drive unit 2 and such corresponding connectors CT are made to engage with each other and be electrically connected when the first and second frame units 5, 6 are coupled to the drive unit 2.

Consequently, the wearable motion assistance device 1 makes it possible to mount the drive unit 2 and the first and second frame units 5, 6 in accordance with the shapes of the first and second body sites around the wearer's joint.

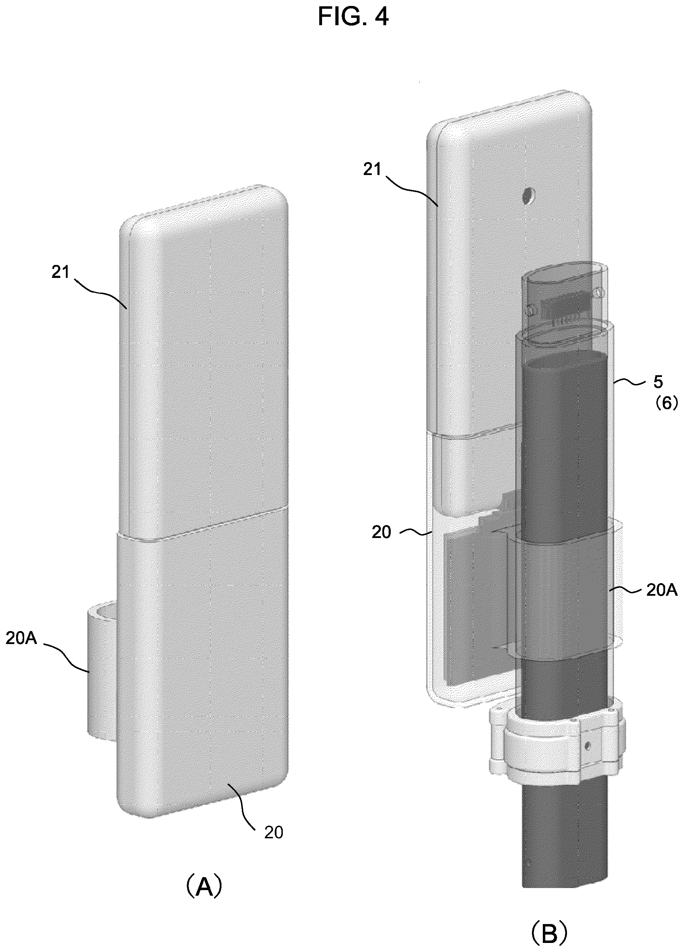

The wearable motion assistance device 1 is designed as illustrated in Fig. 4(A) and Fig. 4(B) so that a communication unit 20 and a power source unit 21 can be integrated together and engage with the first and second frame units 5, 6 in a freely attachable/detachable manner.

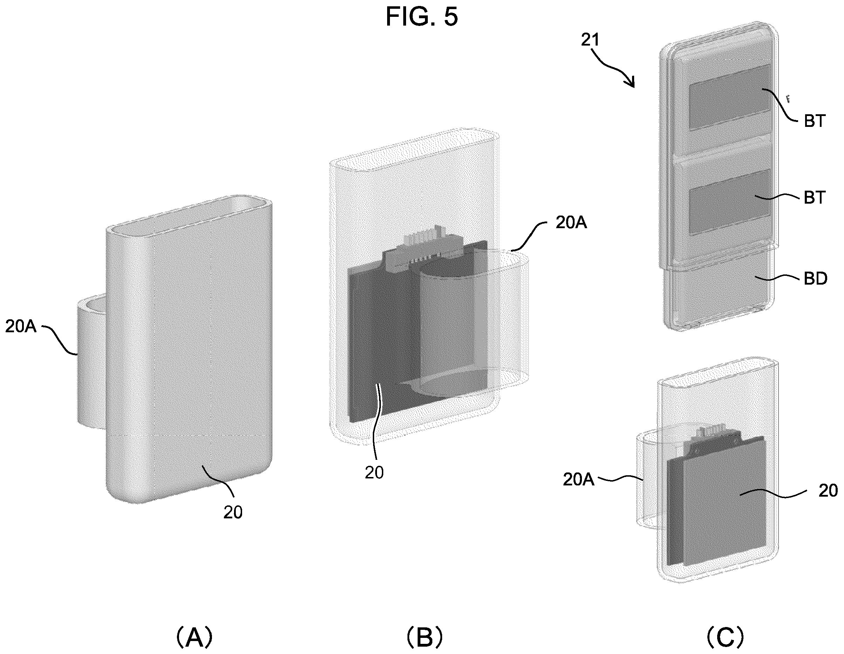

Specifically, as illustrated in Fig. 5(A) to Fig. 5(C), the communication unit 20 has a housing in a predetermined shape and is equipped with a communication function for transmitting and receiving data through connections via a near field communication method such as Bluetooth (registered trademark) or RF-ID. A fixed holder 20A for securing and retaining the first or second frame unit 5, 6 is formed to protrude from a lateral side of this housing and an engagement hole is formed at an upper end of the housing so that it can be freely attached to, or detached from and be integrated with the power source unit 21.

The communication unit 20 which is integrated with the power source unit 21 is wired-connected with the drive unit 2 in its vicinity to enable supply of electric power to the drive unit 2 when engaging with the first or second frame unit 5, 6. Incidentally, a battery BT, which is composed of a lithium ion secondary battery, and a battery driver BD are built in the power source unit 21, so that the power source unit 21 has a connector structure to enable an electric connection when engaging with the communication unit 20.

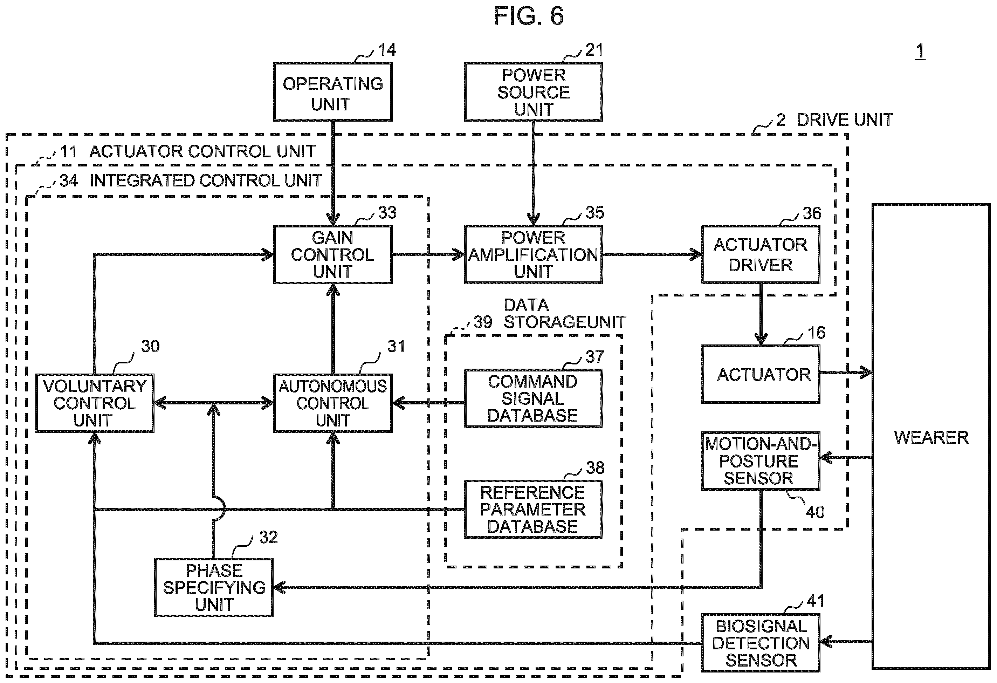

Furthermore, the wearable motion assistance device 1 has a biosignal detection sensor 41 (Fig. 6), which is composed of a contactless BES sensor for detecting a biosignal according to movements of a joint(s) which couple the wearer's first and second body sites together.

With the wearable motion assistance device 1 described above, in a state where the drive unit 2 is located on a lateral side of a joint of the wearer wearing clothes and the first and second frame units 5, 6 are fixed and retained respectively corresponding to the wearer's first and second body sites, the actuator control unit 11 can transmit a driving torque of the actuator 10 according to the movements of the wearer's joint as an assist force to the first and second body sites without giving any physical burdens or hindrances in daily life to the wearer by performing drive control of the actuator 10 for the drive unit 2 on the basis of a detection signal detected by the biosignal detection sensor 41.

### (2) Control System Configuration of Wearable Motion Assistance Device According to First Embodiment

Fig. 6 is a block diagram illustrating an internal system configuration of the wearable motion assistance device 1. The actuator control unit 11 for the drive unit 2, as illustrated in Fig. 6, includes: an integrated control unit 34 configured from a voluntary control unit 30, an autonomous control unit 31, a phase specifying unit 32, and a gain control unit 33; an electric power amplification unit 35 for electric power control of the power source unit 21; an actuator driver 36 for drive control of the actuator 10; and a data storage unit 39 configured from a command signal database 37 and a reference parameter database 38.

With this wearable motion assistance device 1, the actuator driver 36 in the drive unit 2 for imparting the assist force to the wearer is provided with a motion-and-posture sensor 40 which is composed of an angle sensor for detecting rotation angles of the first and second housings 10A, 10B as the wearer's joint rotate. Also, the wearable motion assistance device 1 is also provided with a biosignal detection sensor 41 (which is not illustrated in Fig. 1) for detecting a signal (biosignal) including, for example, the wearer's bioelectric potential.

In the integrated control unit 34, the voluntary control unit 30 supplies, to the power amplification unit 29, a command signal (a control signal for voluntary control) according to the detection signal (biosignal) detected by the biosignal detection sensor 41. The voluntary control unit 30 generates a command signal by applying a specified command function f(t) or gain P to the biosignal detection sensor 41. This gain P may be a preset value or function and can be adjusted via the gain control unit 33 according to the content of operations of the operating unit 14.

Moreover, the drive unit 2 can select a method for controlling a driving torque (the size of the torque and a rotation angle) of the actuator 10 on the basis of angle data detected by the motion-and-posture sensor 40 provided in the actuator control unit 11.

The angle data detected by the joint angle (θ) detected by this motion-and-posture sensor 40 is input to the reference parameter database 38. The phase specifying unit 32 identifies a phase of the wearer's motion by comparing the rotation angle of the joint, which is detected by the motion-and-posture sensor 40, with the joint angle and load which are reference parameters stored in the reference parameter database 38.

Then, when control data of the phase identified by the phase specifying unit 32 is obtained, the autonomous control unit 31 generates a command signal (a control signal of autonomous control) according to the control data of this phase and supplies, to the power amplification unit 29, a command signal for causing the actuator 10 for the drive unit 2 to generate this motive power.

Furthermore, the gain adjusted by the aforementioned gain control unit 32 is input to the autonomous control unit 31 and the autonomous control unit 31 generates a command signal according to this gain and outputs the generated command signal to the electric power amplification unit 35. The electric power amplification unit 35 controls the size of the driving torque and the rotation angle by controlling an electric current for driving the actuator 10 for the drive unit 2 and imparts the driving power by the actuator 10 for the drive unit 2 to the joint which couples the wearer's first and second body sites together.

With the wearable motion assistance device 1 described above, the control signal for controlling the drive unit 2 is amplified by the electric power amplification unit 35 on the basis of the detection signal detected by the biosignal detection sensor 41, which is pasted with reference to the wearer's joint, and is then supplied to the actuator 10 and the driving power of the actuator 10 is transmitted as an assist force to the wearer's joint.

Furthermore, with the wearable motion assistance device 1, the actuator control unit 11 for the drive unit 2: estimates the wearer's task and phase on the basis of the reference parameters stored in the data storage unit 39 and adjusts the drive control relative to the actuator 10 so as to generate the motive power according to that phase; and compensates for mechanical impedance (inertia, viscosity, and rigidity) of a control object of the entire system, which is composed of the entire device and the wearer, in accordance with viscoelasticity of the wearer and gravity of the control object of the entire system on the basis of the absolute angle, the rotation angle, the angular velocity, and the angular acceleration by the motion-and-posture sensor 40 and the driving torque obtained from the actuator driver 36.

Incidentally, a compensation method for the above-mentioned mechanical impedance of the control object of the entire system in accordance with the viscoelasticity of the wearer is described in detail in a Japanese Patent Laid-Open Publication by the inventor of the present application (Japanese Patent Republication No. 2018-92325) and a compensation method in accordance with the gravity of the control object of the entire system is described in detail in a Registered Patent by the inventor of the present application (Patent No. 4178187).

### (3) Configuration of Wearable Motion Assistance Device According to Second Embodiment

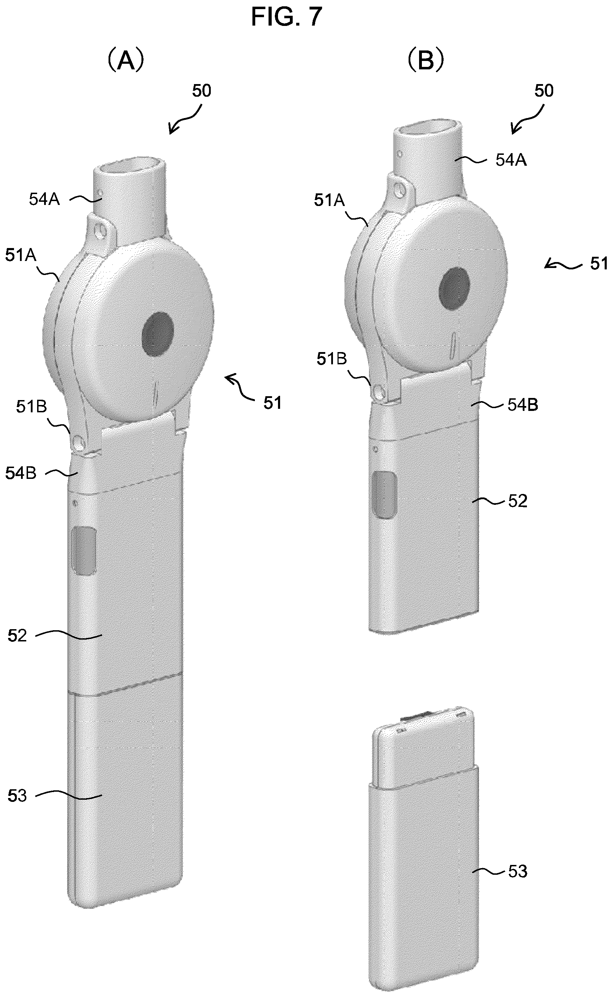

Fig. 7(A) and Fig. 7(B) illustrate a wearable motion assistance device 50 according to a second embodiment and the wearable motion assistance device 50 has a drive unit 51 equipped with the actuator 10 (Fig. 2), a communication unit 52 which is coupled in a freely movable manner to the drive unit 51, and a power source unit 53 which is attached to, and integrated with, the communication unit 52 in a freely detachable manner and is equipped with a battery for supplying the electric power to the actuator 10.

This wearable motion assistance device 50 has substantially the same configuration as that of the aforementioned wearable motion assistance device 1 (Fig. 1) according to the first embodiment, except for the shapes and structures of first and second housings 51A, 51B, which constitute the drive unit 51, and coupling parts 54.

This drive unit 51 has: the first and second housings 51A, 51B in which the stator side and the rotor side of the actuator 10 are housed respectively and which engage with each other so that they rotate separately according to the driving of the actuator 10; and first and second coupling parts 54A, 54B which are formed to protrude respectively in opposite directions from the first and second housings 51A, 51B.

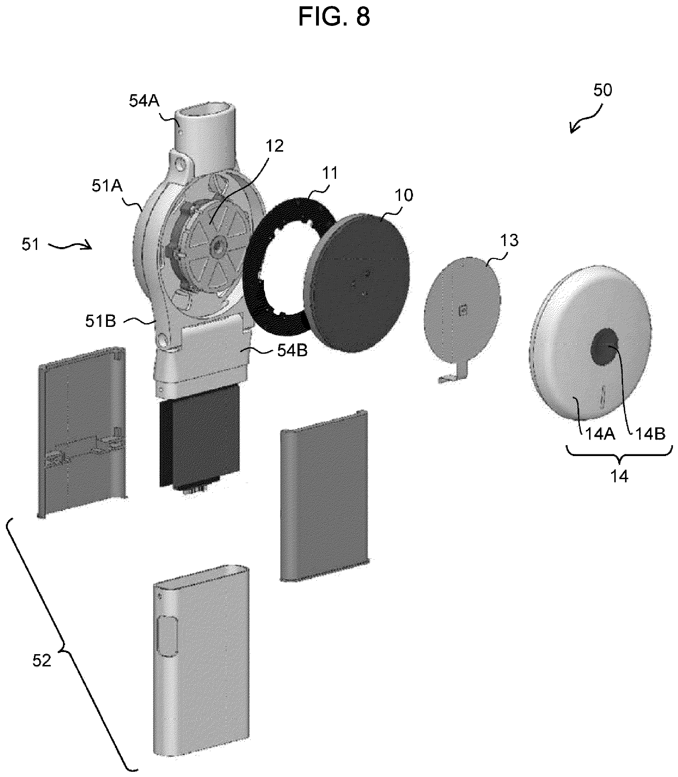

Furthermore, specifically speaking, as illustrated in Fig. 8 in which the same reference numerals as those in Fig. 3 are assigned to parts corresponding to those in Fig. 3, the drive unit 51 has: the flat-shaped actuator 10 which is composed of, for example, a brushless DC motor; the actuator control unit 11 for performing drive control of the actuator 10; the speed reducer 12 which converts a rotational speed of a rotor for the actuator 10 into a specified speed reduction ratio and outputs it; and the flat-shaped operating unit 14 including the touch sensor 13.

In the drive unit 51, a main body of the speed reducer 12 and the actuator control unit 11 are housed in either one of the first or second housing 51A, 51B to be substantially flush with each other; the operating unit 14 is fixed to the main body of the speed reducer 12 so that the actuator 10 is placed between them; and an output axis of the speed reducer 12 is fixed to the other one of the first or second housing 51A, 51B.

With the wearable motion assistance device 50 as described above, by making the drive unit 51 as small and thin as possible as described above, it becomes possible to make the wearer wear the device without giving them any physical burdens even in a state where the wearer is wearing clothes.

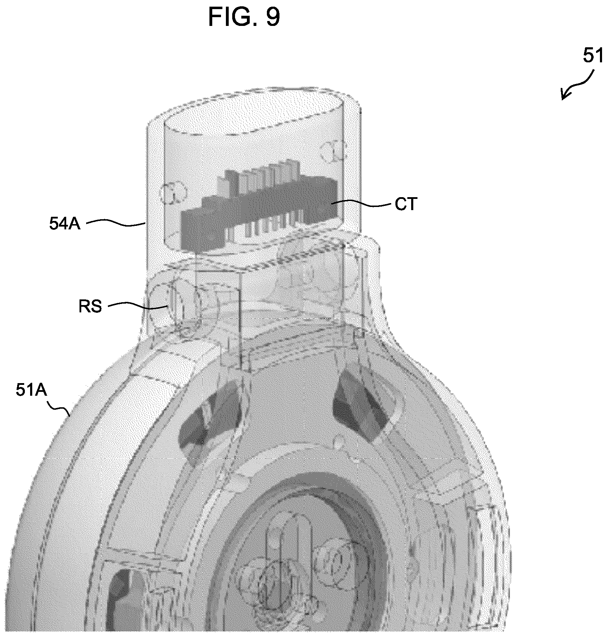

Referring to Fig. 9, each of the first and second coupling parts 54A, 54B for the drive unit 51 has a rotary shaft RS in a direction vertical to the output axis of the speed reducer 12 and the rotary shaft RS is coupled to the end of each first or second housing 51A, 51B in a freely rotatable manner.

Furthermore, a connector having a specified structure is built in each of the first and second coupling parts 54A, 54B for the drive unit 51 and such corresponding connectors CT are made to engage with each other and be electrically connected when a frame unit (which is not illustrated in the drawing) and the communication unit 51 are coupled to the coupling parts, respectively.

Consequently, the wearable motion assistance device 50 makes it possible to mount the drive unit 51, the frame unit (which is not shown in the drawing), and the communication unit 52 in accordance with the shapes of the first and second body sites around the wearer's joint.

Referring to Fig. 7, in the wearable motion assistance device 50, the frame unit (which is not illustrated in Fig. 7) is coupled to the first coupling part 54A for the drive unit 51 in a separable manner and the communication unit 52 (including the integrated power source unit 53 which is integrated therewith) is coupled to the second coupling part 54B for the drive unit 51.

Regarding each of the frame unit (which is not illustrated in the drawing), the communication unit 52, and the power source unit 53, the thickness of its housing is formed to be thinner than the thickness of the first and second housings 51A, 51B which configures the drive unit 51 and engage with each other. Consequently, with the wearable motion assistance device 50, by thinning all the frame unit (which is not illustrated in the drawing), the communication unit 52, and the power source unit 53 with reference to the thickness of the drive unit 51, it becomes possible to make the wearer to wear the device without giving them any physical burdens even in the state where the wearer is wearing clothes.

Furthermore, the wearable motion assistance device 50 has the biosignal detection sensor 41 (which is not illustrated in the drawing) for detecting a biosignal according to movements of a joint which couples the wearer's first and second body sites together in the same manner as in the aforementioned first embodiment.

With this wearable motion assistance device 50 in a state where the drive unit 51 is located on a lateral side of the wearer's joint and the communication unit 52 and the frame unit (which is not illustrated in the drawing) are fixed and retained respectively corresponding to the wearer's first and second body sites, the actuator control unit 11 perform drive control of the actuator 10 for the drive unit 51 on the basis of a detection signal detected by the biosignal detection sensor 41.

As a result, the wearable motion assistance device 50 can transmit the driving torque of the actuator 10 according to the movements of the wearer's joint as an assist force to the first and second body sites without giving any physical burdens or hindrances in daily life to the wearer wearing clothes.

### (4) Variations of Wearable Motion Assistance Device According to Second Embodiment

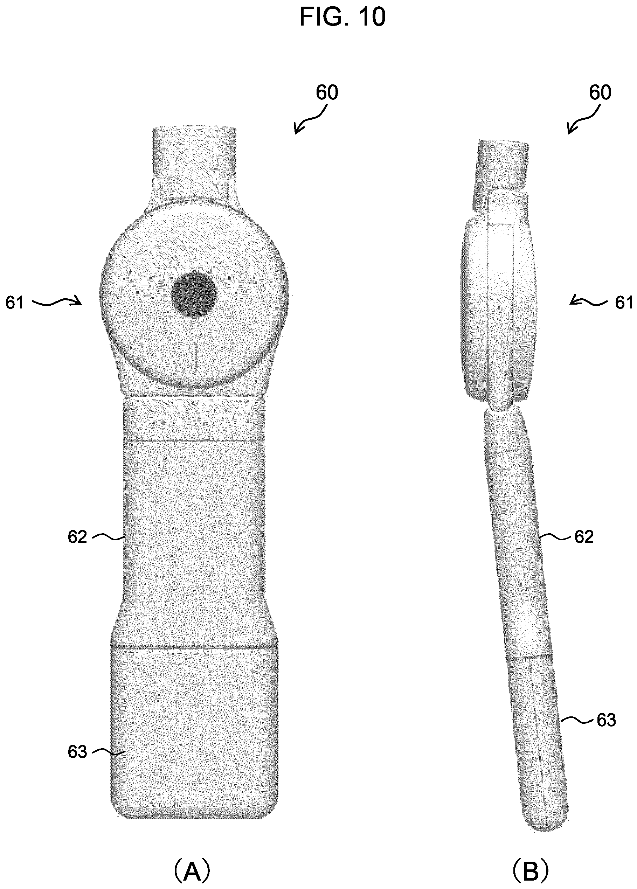

Fig. 10(A) and Fig. 10(B) illustrate a wearable motion assistance device 60 showing a variation of an appearance design of the aforementioned wearable motion assistance device 50. It has the same internal configuration as that of the wearable motion assistance device 50 illustrated in Fig. 7(A) and Fig. 7(B), except that part of a housing configuration of a drive unit 61 and a housing configuration of a communication unit 62 and a power source unit 63 are different.

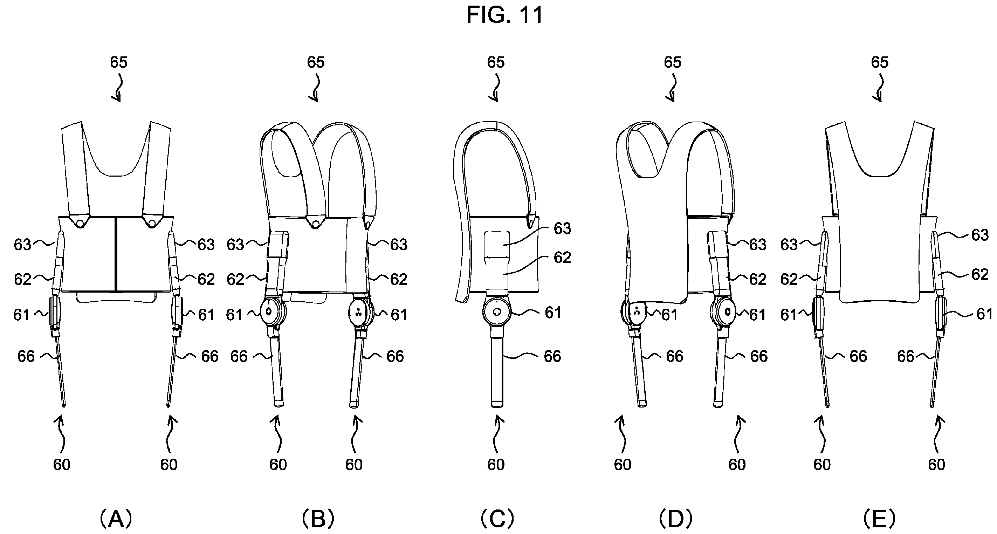

This wearable motion assistance device 60 is designed to be capable of supporting motions of both hip joints of the wearer by attaching a suspension-belt-type corset 65 in a freely attachable/detachable manner to support the wearer's lower back part as illustrated in Fig. 11(A) to Fig. 11(E).

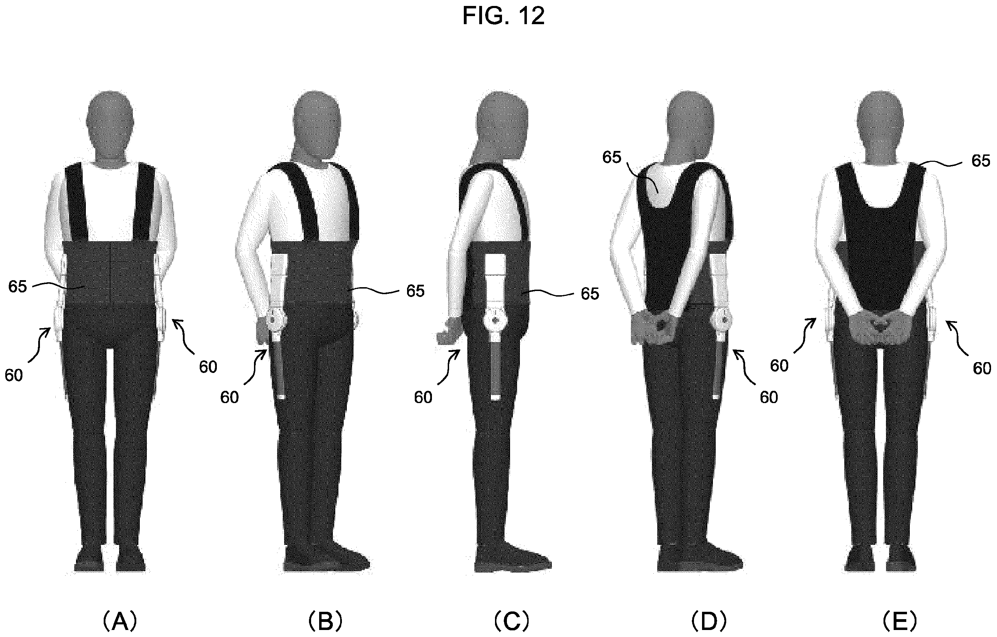

Specifically speaking, as illustrated in Fig. 11(A) to Fig. 11(E) and Fig. 12(A) to Fig. 12(E), communication units 62 and power source units 63 in a pair of wearable motion assistance devices 60 are fixed and attached to both lower ends of the corset 65, respectively, and cuffs (which are not illustrated in the drawing) which are secured and fixed at the respective frame units 66 are made to enter contact with both thigh parts. The enter device is supported by a suspension belt in contact with both shoulders and a pair of drive units 61 are positioned on both sides of the hip joints, respectively.

Consequently, as the wearer wears the corset 65 into which the wearable motion assistance devices 60 are incorporated, it is possible to generate the assist force to assist movements of the thigh parts relative to the lower back part when the wearer stands up from their bent state (a semi-crouching posture). Furthermore, regarding the wearer's motions other than the motion to stand up from the semi-crouching posture, it is also possible to perform, for example, a motion to lift a heavy article from the semi-crouching posture and a motion to assist moving from one place to another.

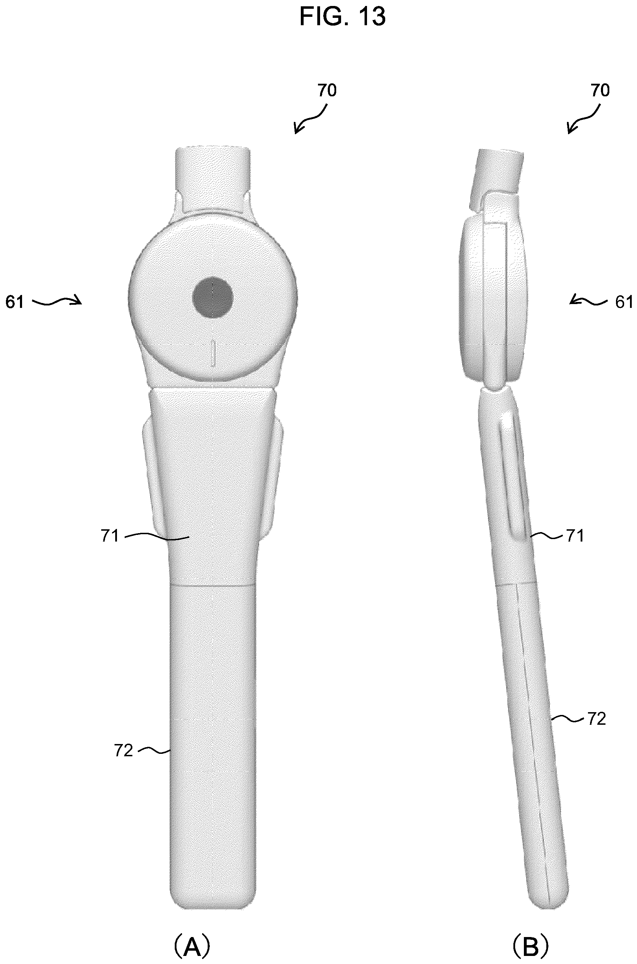

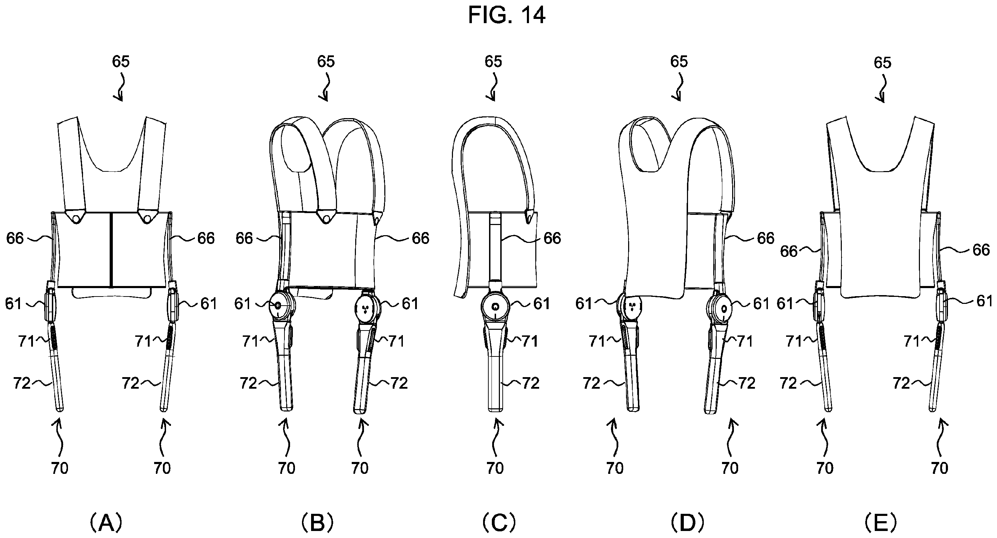

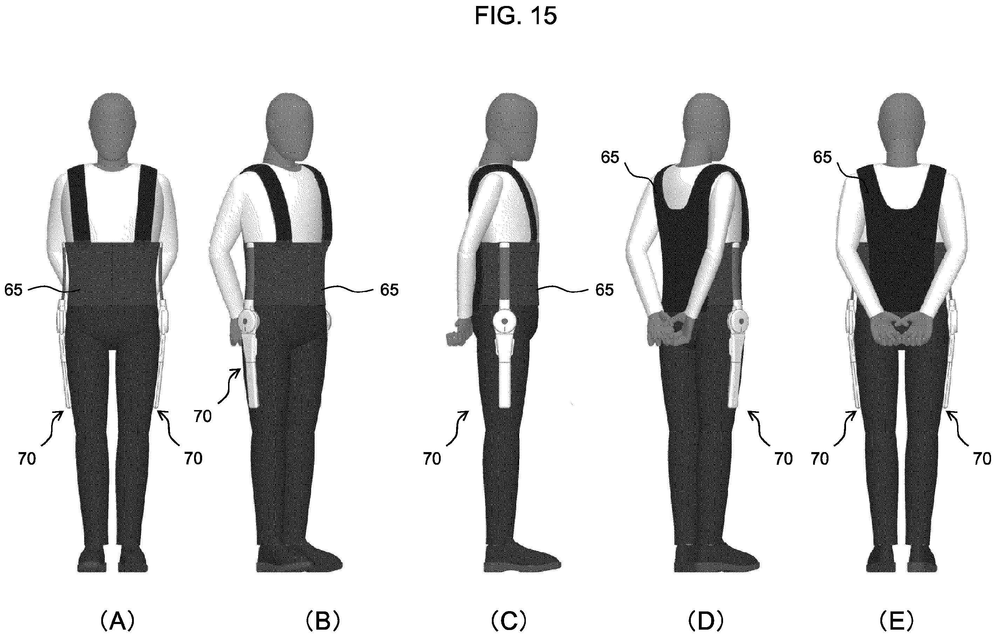

Furthermore, Fig. 13(A) and Fig. 13(B), in which the same reference numerals as those in Fig. 7(A) and Fig. 7(B) are assigned to parts corresponding to those in Fig. 7(A) and Fig. 7(B), illustrate a wearable motion assistance device 70 as another design. This wearable motion assistance device 70 has the same configuration as that of the aforementioned wearable motion assistance device 50, except that a communication unit 71 and a power source unit 72 have relatively slim housings. The state of wearing the corset 62 into which this wearable motion assistance device 70 is incorporated is illustrated in Fig. 14(A) to Fig. 14(E) and Fig. 15(A) to Fig. 15(E).

This wearable motion assistance device 70 is designed, unlike the aforementioned wearable motion assistance device 50, so that a frame unit 66 is fixed and mounted at each of both lower ends of the corset 65 and cuffs (which are not illustrated in the drawing) secured and fixed to the communication unit 71 and the power source unit 72 which are integrated together are made to enter into contact with both thigh parts.

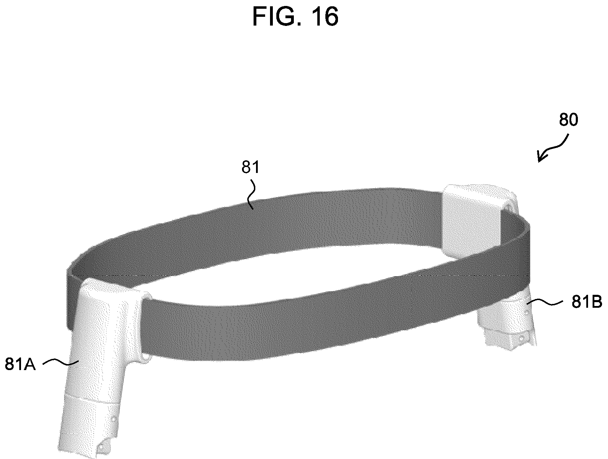

Furthermore, as another type of device wearing method, it is also possible to support motions of both the hip joints of the wearer by combining a pair of wearable motion assistance devices 70 (50, 60) by using a lower back belt 81, on which a pair of fixed holders 81A, 81B are formed on its both sides, as a frame unit 80 as illustrated in Fig. 16.

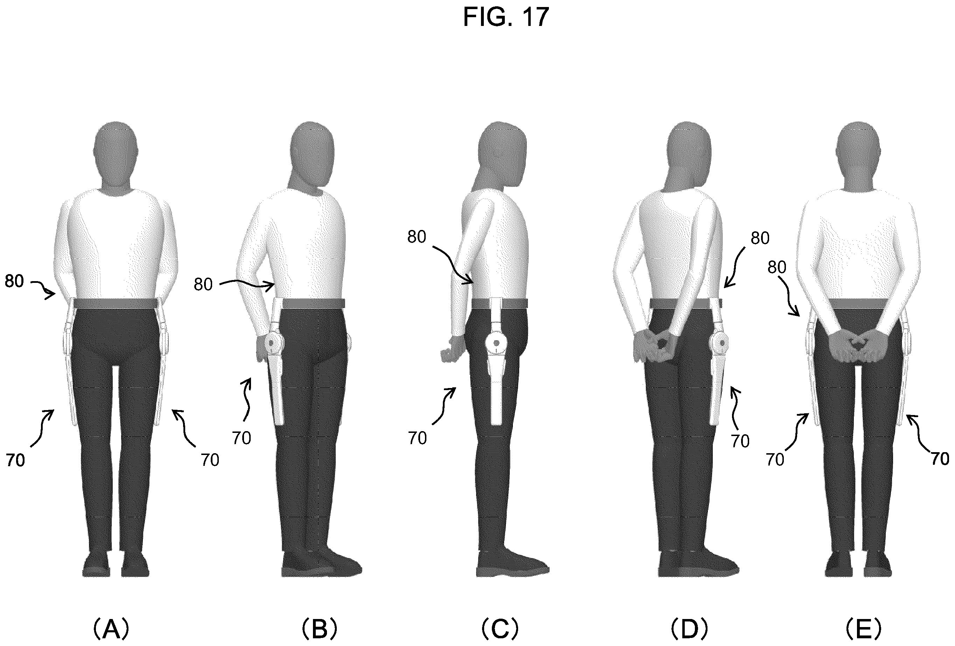

Specifically speaking, a coupling part of a drive unit 61 for the wearable motion assistance device 70 is coupled to each of the pair of fixed holders 81A, 81B formed on the lower back belt 81 in the frame unit 80 and the cuff (which is not illustrated in the drawing) to which the communication unit 71 and the power source unit 72 are fixed and secured are made to enter contact with both the thigh parts, thereby positioning the pair of drive units 71 respectively on both sides of the hip joints. This device-wearing state is illustrated in Fig. 17(A) to Fig. 17(E).

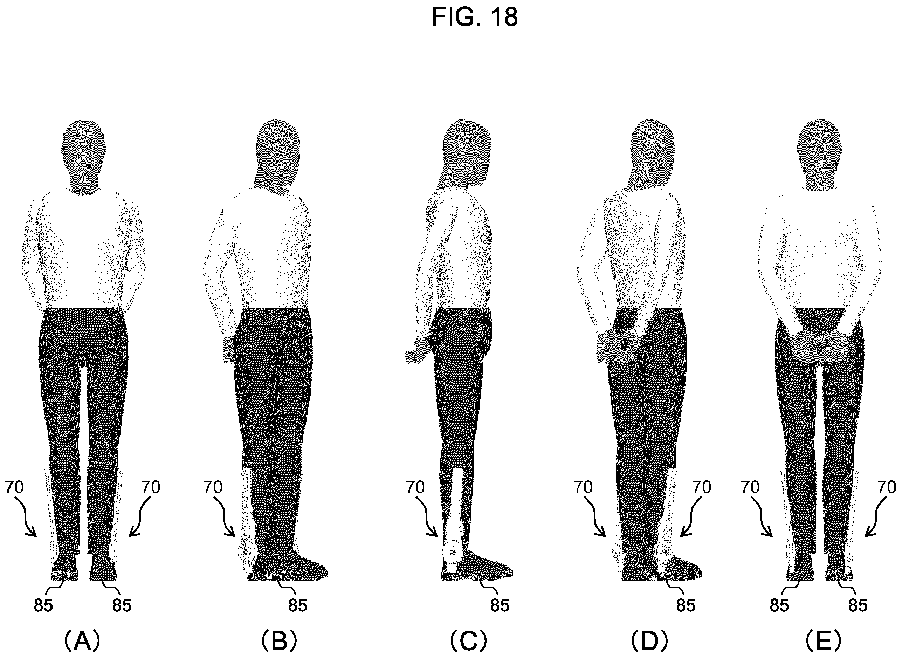

Furthermore, as another type of device wearing method, it is also possible to support motions of the wearer's ankle joint(s) by using a shoe(s) 85 on which a fixed holder (which is not illustrated in the drawing) is formed on the outside of a heel as illustrated in Fig. 18(A) to Fig. 18(E). Specifically speaking, a coupling part of the drive unit 71 for the wearable motion assistance device 70 is coupled to the fixed holder formed on each of the right and left shoes 85 and the cuff (which is not illustrated in the drawing) which is fixed and secured to the communication unit 71 and the power source unit 72 is made to enter into contact with an ankle part, thereby positioning the pair of drive units 71 to both sides of the ankles joints, respectively.

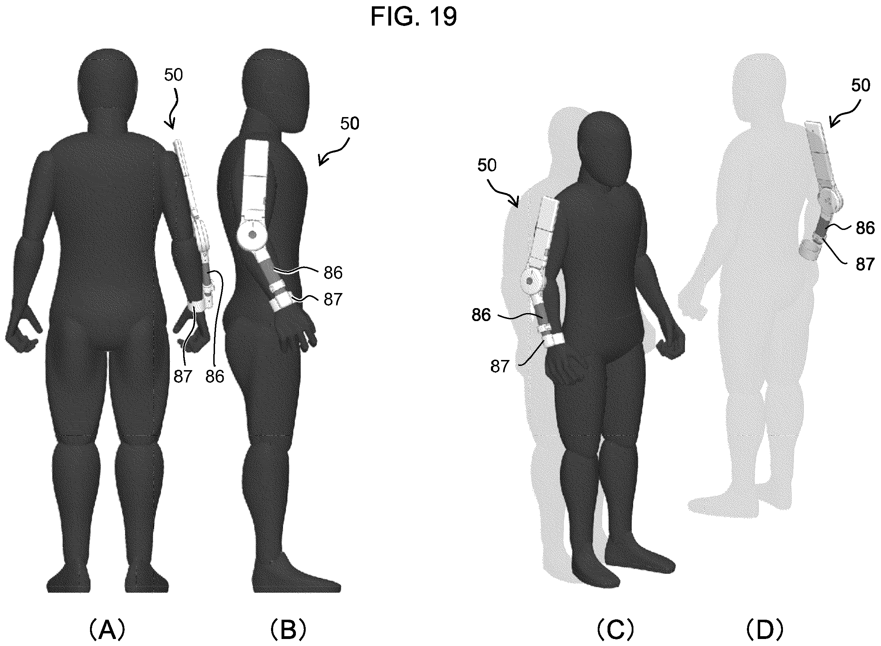

Furthermore, as another type of device wearing method, it is also possible to support motions of the wear's elbow joint, as illustrated in Fig. 19(A) to Fig. 19(D), by wrapping and retaining a cuff 87, which is fixed and secured to a frame unit 86, around a wrist in a state where the drive unit 51 for the wearable motion assistance device 50 illustrated in Fig. 7 is positioned on the outside of the elbow, and by wrapping and retaining a cuff (which is not illustrated in the drawing) secured and fixed to the communication unit 52 and the power source unit 53, which are integrated together, around the upper arm.

### (5) Application Examples of Wearable Motion Assistance Devices According to First and Second Embodiments

The wearable motion assistance devices 1, 50, 60, 70 according to the aforementioned first and second embodiments can be combined together and be made to perform motions by positioning the devices at a desired joint site(s) in the wearer's body.

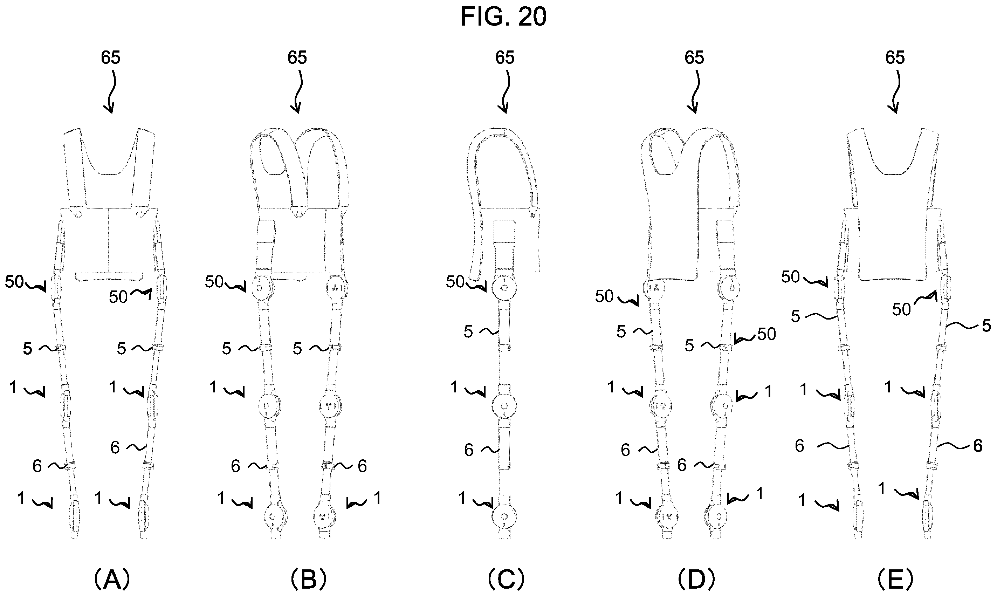

For example, as illustrated in Fig. 20(A) to Fig. 20(E), in which the same reference numerals as those in Fig. 11(A) to Fig. 11(E) are assigned to parts corresponding to those in Fig. 11(A) to Fig. 11(E), a desired number of the wearable motion assistance devices 1 may be further combined with a pair of the wearable motion assistance devices 70 to which the aforementioned suspension-belt-type corset 65 is attached in a freely attachable/detachable manner.

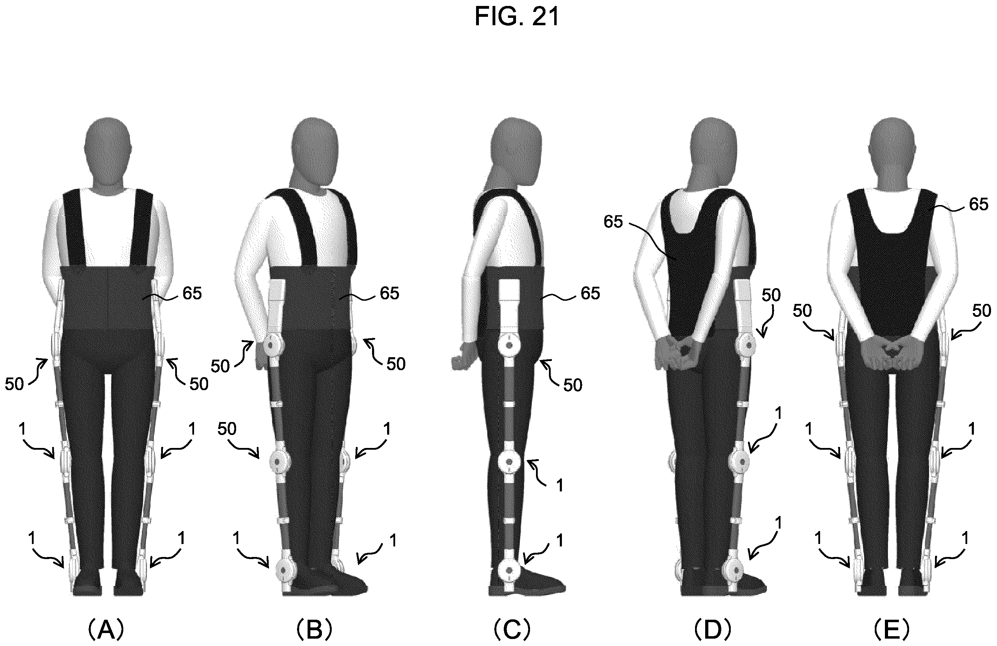

Fig. 21(A) to Fig. 21(E) illustrate a state where practically the first and second wearable motion assistance devices 1, 50 (Fig. 1 and Fig. 7) are combined together and mounted on the wearer. Consequently, it becomes possible to support the wearer's motions of both their hip joints, both their knee joints, and both their ankle joints.

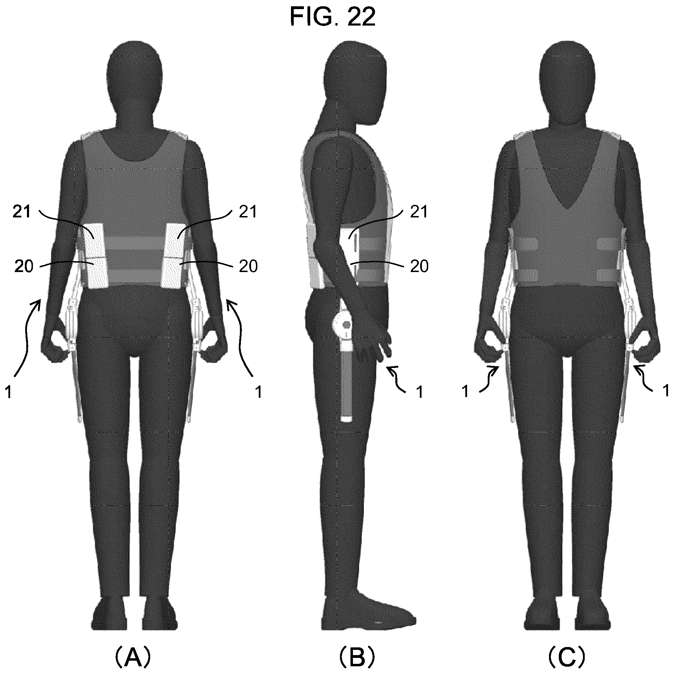

Moreover, the communication unit 20 and the power source unit 21, which are integrated together in the wearable motion assistance device 60 according to the first embodiment, can be added and appended as necessary. For example, since the communication unit 20 and the power source unit 21 which are integrated together can perform contactless communication and power supply, it becomes possible to attach them at desired positions in the corset 65 (particularly, for example, on both sides of a lower-back back-face part which is a position that does not interfere with the wearer's motions) as illustrated in Fig. 22(A) to Fig. 22(C). Consequently, the battery capacity can be substantially increased and the duration of motions can be extended.

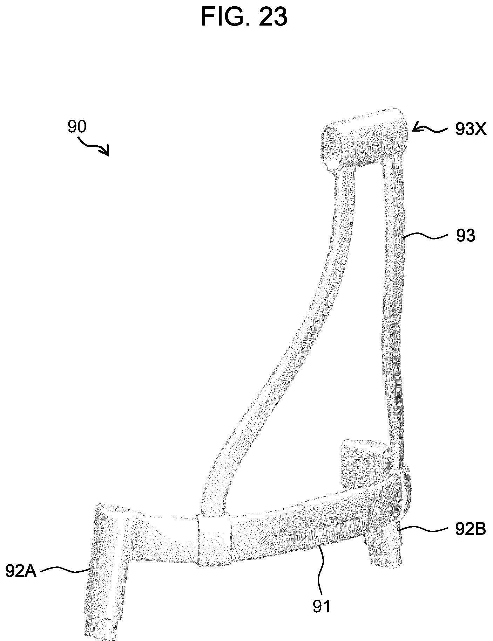

For example, by applying an upper-body-type frame unit 90 as illustrated in Fig. 23 instead of the aforementioned frame unit 80 (Fig. 16), it becomes possible to perform a motion to assist joint sites at the wearer's upper limbs and lower back and also perform a motion to assist joint sites in their lower limbs with reference to the lower back.

This upper-body-type frame unit 90 is formed by integrating together: a lower back support 91 mounted on the wearer's lower back and designed to enter into contact with the wearer's back surface at their lower back; a pair of fixed holders 92A, 92B coupled to support a right end and a left end of the lower back support 91; and a back-part support 93 configured from a frame structure in a substantially isosceles triangle shape to support the wearer's back so that it extends upwards from its both sides between which a central part of the lower back support 91 is positioned. A coupling part 93X is formed in a horizonal direction at an upper end of this back-part support 93 so that it can be coupled to the coupling part 3 for the drive unit 2 in a freely attachable/detachable manner.

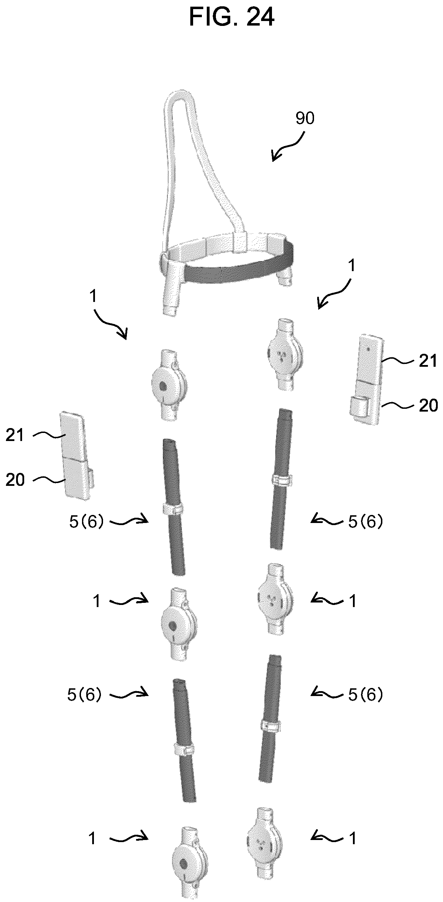

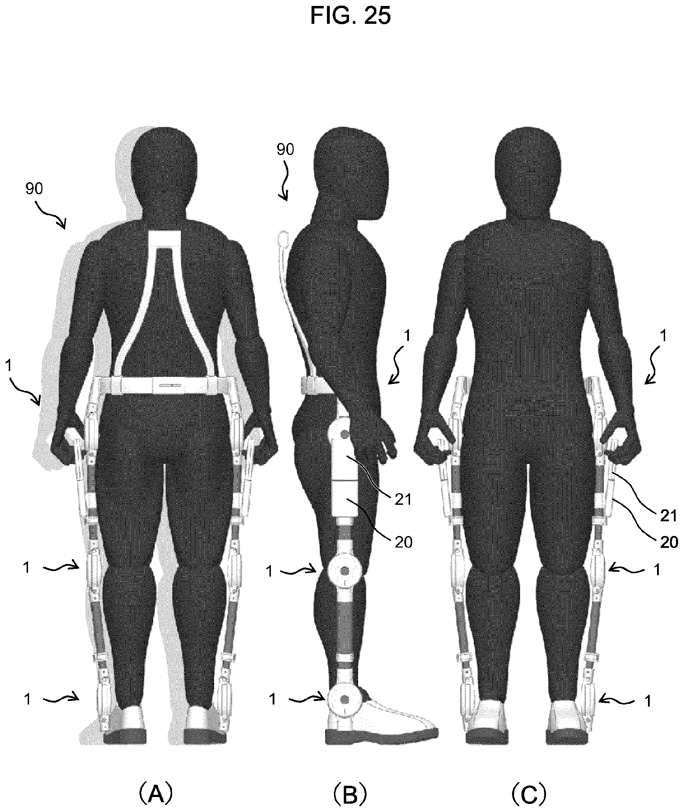

It becomes possible to support motions of joints at the wearer's lower back part and lower limbs by combining a plurality of wearable motion assistance devices 1 including this upper-body-type frame unit 90. For example, as illustrated in Fig. 24 and Fig. 25(A) to Fig. 25(C), one of the coupling parts 3 of the drive unit 2 for each wearable motion assistance device 1 is coupled to a pair of fixed holders 92A, 92B of the upper-body-type frame unit 90 to support the motions of the hip joint and one of the coupling parts 3 of the drive unit 2 for another wearable motion assistance device 1 is coupled to the other coupling part 3 of the above-mentioned drive unit 2 via the frame unit 5(6) to support the motions of the knee joint.

Furthermore, one of the coupling parts 3 of the drive unit 2 for another wearable motion assistance device 1 is coupled to the other coupling part 3 of the drive unit 2 of the above-mentioned wearable motion assistance device 1 via the frame unit 5(6) to support the motions of the ankle joint. The fixed holder formed on the outside of the heel at the aforementioned shoe 85 is coupled to the other coupling part 3 of the drive unit 2 for this wearable motion assistance device 1.

Under this circumstance, the frame unit 5(6) which couples together the drive unit 2 for supporting the motions of the hip joint and the drive unit 2 for supporting the motions of the knee joint, and the frame unit 5(6) which couples together the drive unit 2 for supporting the motions of the knee joint and the drive unit 2 for supporting the motions of the ankle joint can adjust the length between the wearer's hip joint and the knee joint and the length between the knee joint and the ankle joint, respectively.

Moreover, the communication unit 20 and the power source unit 21 which are integrated together can be attached to the frame unit 5(6), which couples together the drive unit 2 for supporting the motions of the hip joint and the drive unit 2 for supporting the motions of the knee joint, in a freely attachable/detachable manner. Furthermore, the communication unit 20 and the power source unit 21 which are integrated together may be attached to a desired frame unit 5(6) as necessary, for example, when it is desired to enhance the supply of the electric power to the drive unit 2.

Incidentally, although this is not illustrated in the drawing, a cuff(s) (which is not illustrated in the drawing) which is fixed and secured to a necessary site(s) of the frame unit 5(6) may be made to enter into contact with a body site(s) when supporting the motions of the wearer's hip joints, knee joints, and ankle joints, respectively.

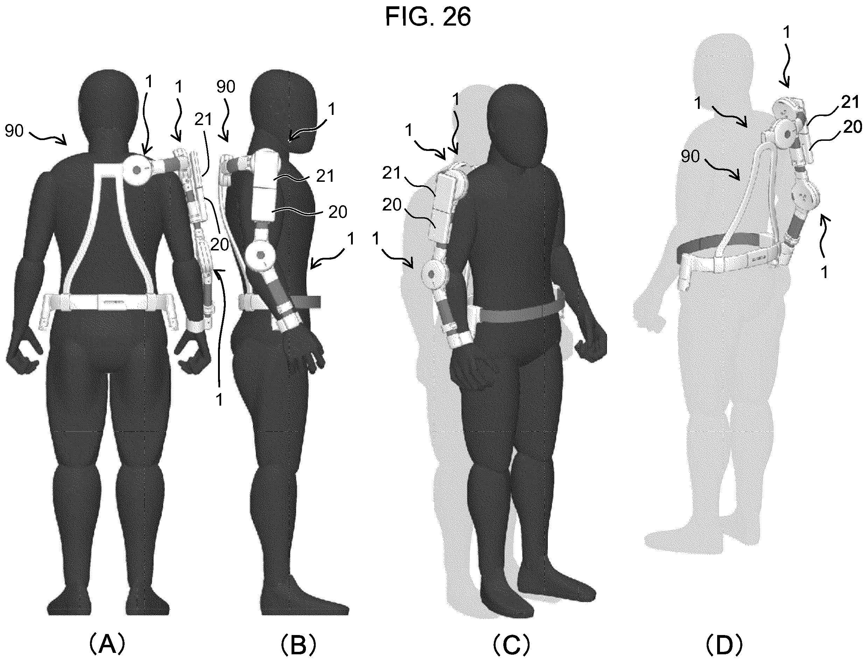

As another embodiment in which a plurality of wearable motion assistance devices 1 including this upper-body-type frame unit 90 are combined together, it becomes possible to support the motions of the shoulder joints and elbow joints in the wearer's upper body as illustrated in Fig. 26(A) to Fig. 26(D).

Specifically speaking, one of the coupling parts 3 of the drive unit for the wearable motion assistance device 1 is coupled to the coupling part 93X at the upper end of the back-part support 93 in the upper-body-type frame unit 90 to support motions of the shoulder joint in a frontal plane direction and one of the coupling parts 3 of the drive unit 2 for the wearable motion assistance device 1 is coupled to the other coupling part 3 of the above-mentioned drive unit 2 to support the motions of the shoulder joint in a sagittal plane direction.

Furthermore, one of the coupling parts 3 of the drive unit 2 for the wearable motion assistance device 1 is coupled via the frame unit 5(6) to the other coupling part 3 of the drive unit 2 for the above-mentioned wearable motion assistance device 1 to support the motions of the elbow joint. The frame unit 5(6) to which a cuff to be wrapped around a wrist is secured and fixed is coupled to the other coupling part 3 of the drive unit 2 for this wearable motion assistance device 1.

Under this circumstance, the frame unit 5(6) for coupling together the drive unit 2 for supporting the motions of the shoulder join in the frontal plane direction and the drive unit 2 for supporting the motions of the shoulder joint in the sagittal plane direction, and the frame unit 5(6) for coupling together the drive unit 2 for supporting the motions of the shoulder joint in the sagittal plane direction and the drive unit 2 for supporting the motions of the elbow joint can adjust the length of the wearer's shoulder width, the length between the shoulder joint and the elbow joint, and the length between the elbow joint and the wrist.

Moreover, the communication unit 20 and the power source unit 21 which are integrated together can be attached to the frame unit 5(6), which couples together the drive unit 2 for supporting the motions of the shoulder joint in the sagittal plane direction and the drive unit 2 for supporting the motions of the elbow joint, in a freely attachable/detachable manner.

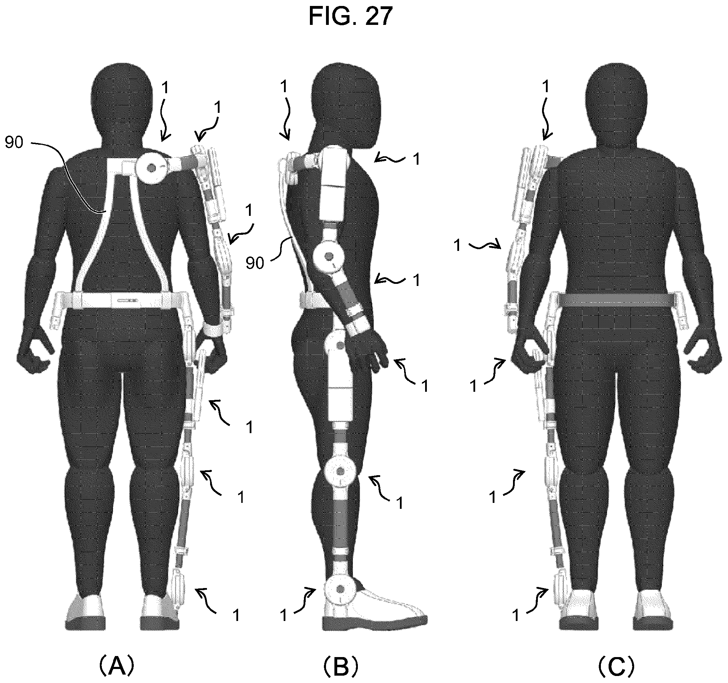

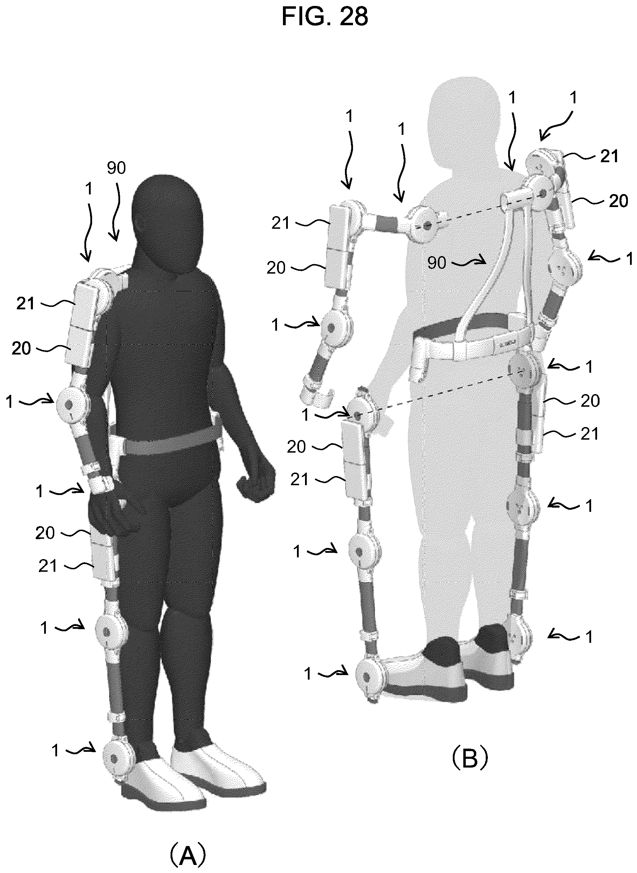

Furthermore, as illustrated in Fig. 27(A) to Fig. 27(C) and Fig. 28(A) and Fig. 28(B), it becomes possible to support motions of various kinds of joints in the wearer's upper limbs and lower limbs as another embodiment in which a plurality of wearable motion assistance devices 1 including the upper-body-type frame unit 90 are combined together.

Specifically speaking, by further fusing together the combination of the plurality of wearable motion assistance devices 1 for the lower body (the lower limbs) as illustrated in Fig. 25(A) to Fig. 25(C) described earlier and the combination of the plurality of wearable motion assistance devices 1 for the upper body (the upper limbs) as illustrated in Fig. 26(A) to Fig. 26(D) described earlier, it becomes possible to support the motions of the various kinds of joints in the wearer's upper limbs and lower limbs. This fused combination is designed to support the entire device with reference to the wearer's lower back part by using the upper-body-type frame unit 90.

### (6) Other Embodiments

Incidentally, the aforementioned first and second embodiments have described the case where the frame unit having the shape and structure as illustrated in Fig. 23 is applied as the upper-body-type frame unit 90; however, the present invention is not limited to this example and those having various shapes and structures may be applied according to the content of the combination of the plurality of the wearable motion assistance devices 1, 50, 60, 70 by positioning the devices at a desired joint site(s) in the wearer's body.

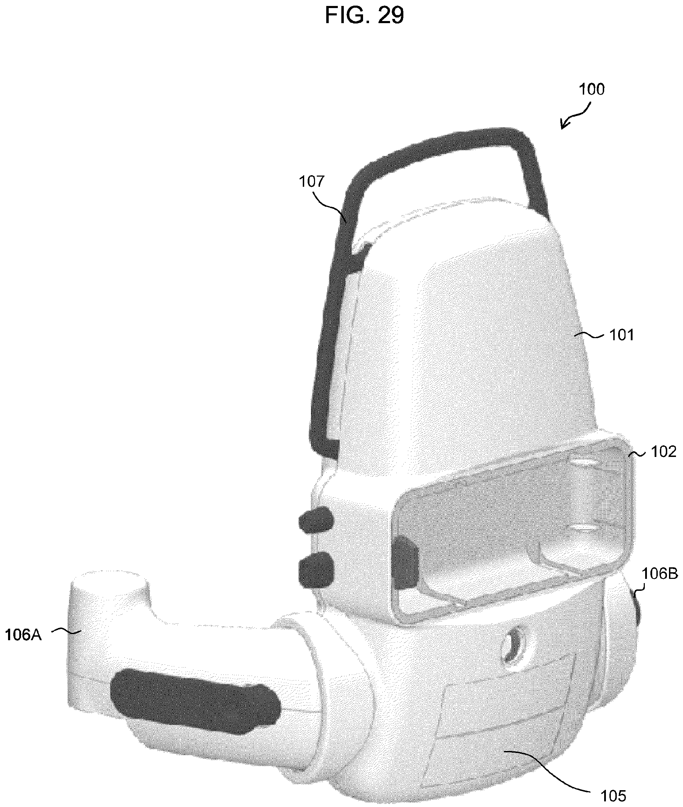

For example, an upper-body-type frame unit 100 as illustrated in Fig. 29 is configured by integrating together a communication unit 101 and a power source unit 102 in predetermined shapes (no battery is illustrated in the drawing) in addition to the upper-body-type frame unit 90 illustrated in Fig. 23 described earlier.

Specifically speaking, the upper-body-type frame unit 100 illustrated in Fig. 29 is formed by integrating together: a lower back support 105 mounted on the wearer's lower back and designed to enter into contact with the wearer's back surface at their lower back; a pair of fixed holders 106A, 106B coupled to support a right end and a left end of the lower back support 105; a power source unit 102 in which a central part of the lower back support 105 is provided in its upper side; a communication unit 101 provided in an upper side of the power source unit 102; and a back support frame 107 for supporting the wearer's back so that it extends upwards from the inside of the communication unit 101.

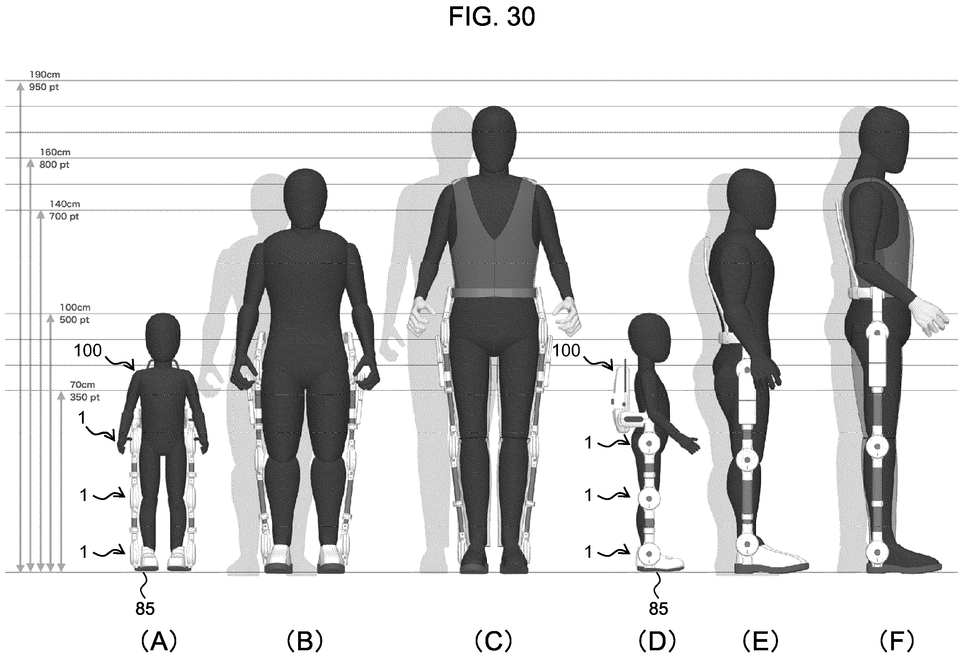

This upper-body-type frame unit 100 is very effective when, for example, the body size of the wearer is very small like that of an infant or a child. When the body size of the wearer is very small as illustrated in Fig. 30(A) to Fig. 30(F) (Fig. 30(A) and Fig. 30(D)), the combination of the plurality of the wearable motion assistance devices 1 cannot be applied unless the length of the frame unit 5(6) coupled to the drive unit 2 is made much shorter than that for an adult.

When the sufficient length of the frame unit 5(6) cannot be secured, the communication unit and the power source unit which are integrated together cannot be attached directly to the frame unit 5(6); and, therefore, by applying the upper-body-type frame unit 100, even the wearer whose body size is small can operate the device sufficiently for practical purposes by positioning the device at a desired joint site(s).

### REFERENCE SIGNS LIST

- 1, 50, 60, 70:: wearable motion assistance device
- 2, 51, 61:: drive unit
- 5:: first frame unit
- 6:: second frame unit
- 20, 52, 62, 71:: communication unit
- 21, 53, 63, 72:: power source unit
- 10:: actuator
- 11:: actuator control unit
- 12:: speed reducer
- 13:: touch sensor
- 14:: operating unit
- 30:: voluntary control unit
- 31:: autonomous control unit
- 32:: phase specifying unit
- 33:: gain control unit
- 34:: integrated control unit
- 35:: electric power amplification unit
- 36:: actuator driver
- 37:: command signal database
- 38:: reference parameter database
- 39:: data storage unit
- 40:: motion-and-posture sensor
- 41:: biosignal detection sensor
- 65:: corset
- 66, 80, 86:: frame unit
- 90, 100:: upper-body-type frame unit

## Claims

1. A wearable motion assistance device (1) comprising:
a drive unit (2) having first and second housings (2A, 2B) in which a stator side and a rotor side of an actuator (10) are respectively housed and which engage with each other so that the first and second housings (2A, 2B) rotate separately according to driving of the actuator (10), wherein coupling parts (3) of the same structure are formed to protrude from the first and second housings (2A, 2B) respectively in mutually opposite directions;
first and second frame units (5, 6) that are respectively coupled to the respective coupling parts (3) of the drive unit (2) in a separable manner;
a power source unit (21) that engages with the first or second frame unit (5, 6) in a freely attachable/detachable manner and is equipped with a battery for supplying electric power to the actuator (10);
a control unit (11) provided in the drive unit (2) and designed to perform drive control of the actuator (10);
a physical quantity detector (40) that detects a physical quantity regarding a rotary motion between the first and second housings (2A, 2B) from a driving current supplied to the actuator (10);
a biosignal detection unit (41) that detects a biosignal according to movements of a joint connecting first and second body sites of a wearer; and
a data storage unit (39) that stores a reference parameter of each phase which is a sequence of minimum motion units that constitute a motion pattern of the wearer classified as a task,
wherein in a state where the drive unit (2) is located on a lateral side of the wearer's joint and the first and second frame units (5, 6) are fixed and retained corresponding to the wearer's first and second body sites, respectively,
the control unit (11): estimates the wearer's task and phase on the basis of the reference parameter stored in the data storage unit (39) while performing drive control to cause the actuator (10) to generate motive power in accordance with the wearer's intention on the basis of the biosignal detected by the biosignal detection unit (41), and adjusts the drive control to cause the actuator (10) to generate motive power according to the phase; and
compensates for mechanical impedance of a control object of an entire system composed of the entire device and the wearer on the basis of the physical quantity detected by the physical quantity detector (40) and in accordance with viscoelasticity of the wearer and gravity of the control object of the entire system,
wherein
the drive unit (2) has a flat-shaped actuator (10), an actuator driver (36) which performs drive control of the actuator (10), a speed reducer (12) which converts a rotational speed of a rotor for the actuator (10) into a specified speed reduction ratio and outputs the converted rotational speed, and a flat-shaped operating unit (14) including a touch sensor (13);
wherein a main body of the speed reducer (12) and the actuator driver (36) are housed in either one of the first or second housing (2A, 2B) to be substantially flush with each other and the operating unit (14) is fixed to the main body of the speed reducer (12) so that the actuator (10) is located between the main body and the operating unit (14);
and wherein
an output axis of the speed reducer (12) is fixed to the other one of the first or second housing (2A, 2B).

2. The wearable motion assistance device (1) according to claim 1,
wherein the physical quantity detector (40) detects an absolute angle, a rotation angle, an angular velocity, angular acceleration, and a driving torque between the first and second housings (2A, 2B) as the physical quantity regarding the rotary motion between the first and second housings (2A, 2B).

3. The wearable motion assistance device (1) according to claim 1 or 2,
wherein each of the coupling parts (3) of the drive unit (2) has a rotary shaft along a direction vertical to an output axis of the speed reducer (12) and the first and second frame units (5, 6) are coupled to the drive unit (2) so as to be freely rotatable about the rotary shaft of each corresponding coupling part (3).

4. The wearable motion assistance device (1) according to any one of claims 1 to 3,
Wherein each of the first and second frame units (5, 6) and the power source unit (21) is formed so that a thickness of its housing is thinner than a thickness of the first and second housings (2A, 2B) which constitute the drive unit (2) and engage with each other.

5. The wearable motion assistance device (1) according to any one of claims 1 to 4,
wherein either one or both of the first and second frame units (5, 6) can be adjusted in a freely expandable and contractible manner in a direction of coupling to the coupling part (3).

6. A wearable motion assistance device (50, 60, 70) comprising:
a drive unit (51, 61) having first and second housings (51A, 51B) in which a stator side and a rotor side of an actuator (10) are respectively housed and which engage with each other so that the first and second housings (51A, 51B) rotate separately according to driving of the actuator (10), wherein first and second coupling parts (54A, 54B) are formed to protrude from the first and second housings (51A, 51B) respectively in mutually opposite directions;
a frame unit that is coupled to the first coupling part (54A) of the drive unit (51 61) in a separable manner;
a communication unit (52, 62, 71) that is coupled to the second coupling part (54B) of the drive unit (51, 61);
a power source unit (53, 63, 72) which is attached to, and integrated with, the communication unit (52, 62, 71) in a freely detachable manner and is equipped with a battery for supplying electric power to the actuator (10);
a control unit (11) provided in the drive unit (51, 61) and designed to perform drive control of the actuator (10);
a physical quantity detector (40) that detects a physical quantity regarding a rotary motion between the first and second housings (51A, 51B) from a driving current supplied to the actuator (10);
a biosignal detection unit (41) that detects a biosignal according to movements of a joint connecting first and second body sites of a wearer; and
a data storage unit (39) that stores a reference parameter of each phase which is a sequence of minimum motion units that constitute a motion pattern of the wearer classified as a task,
wherein in a state where the drive unit (51, 61) is located on a lateral side of the wearer's joint and the communication unit (52, 62, 71) and the frame unit are fixed and retained corresponding to the wearer's first and second body sites, respectively,
the control unit (11): estimates the wearer's task and phase on the basis of reference parameters stored in the data storage unit (39) while performing drive control to cause the actuator (10) to generate motive power in accordance with the wearer's intention on the basis of the biosignal detected by the biosignal detection unit (41), and adjusts the drive control to cause the actuator (10) to generate motive power according to the phase; and
compensates for mechanical impedance of a control object of an entire system composed of the entire device and the wearer on the basis of the physical quantity detected by the physical quantity detector (40) and in accordance with viscoelasticity of the wearer and gravity of the control object of the entire system,
wherein
the drive unit (51, 61) has a flat-shaped actuator (10), an actuator driver (36) which performs drive control of the actuator (10), a speed reducer (12) which converts a rotational speed of a rotor for the actuator (10) into a specified speed reduction ratio and outputs the converted rotational speed, and a flat-shaped operating unit (14) including a touch sensor (13);
wherein a main body of the speed reducer (12) and the actuator driver (36) are housed in either one of the first or second housing (51A, 51B) to be substantially flush with each other and the operating unit (14) is fixed to the main body of the speed reducer (12) so that the actuator (10) is located between the main body and the operating unit (14);
and wherein
an output axis of the speed reducer (12) is fixed to the other one of the first or second housing (51A, 51B).

7. The wearable motion assistance device (50, 60, 70) according to claim 6,
wherein the physical quantity detector (40) detects an absolute angle, a rotation angle, an angular velocity, angular acceleration, and a driving torque between the first and second housings (51A, 51B) as the physical quantity regarding the rotary motion between the first and second housings (51A, 51B).

8. The wearable motion assistance device (50, 60, 70) according to claim 6 or 7,
wherein the first and second coupling parts (54A, 54B) of the drive unit (51, 61) have rotary shafts along a direction vertical to an output axis of the speed reducer (12) and the frame unit and the communication unit (52, 62, 71) are coupled to the drive unit (51, 61) so as to be freely rotatable about the rotary shafts of the first and second coupling parts (54A, 54B).

9. The wearable motion assistance device (50, 60, 70) according to any one of claims 6 to 8,
wherein each of the frame unit, the communication unit (52, 62, 71), and the power source unit (53, 63, 72) is formed so that a thickness of its housing is thinner than a thickness of the first and second housings (51A, 51B) which constitute the drive unit (51, 61) and engage with each other.

10. The wearable motion assistance device (50, 60, 70) according to any one of claims 6 to 9,
wherein the frame unit can be adjusted in a freely expandable and contractible manner in a direction of coupling to the first coupling part (54A).

## Patentansprüche

1. Tragbare Bewegungsunterstützungsvorrichtung (1), umfassend:
eine Antriebseinheit (2) mit einem ersten und einem zweiten Gehäuse (2A, 2B), in denen jeweils eine Statorseite und eine Rotorseite eines Aktuators (10) aufgenommen sind und die miteinander in Eingriff stehen, sodass das erste und das zweite Gehäuse (2A, 2B) getrennt entsprechend dem Antrieb des Aktuators (10) rotieren, wobei Kopplungsteile (3) derselben Struktur ausgebildet sind, um vom ersten und vom zweiten Gehäuse (2A, 2B) jeweils in zueinander entgegengesetzten Richtungen wegzustehen;
eine erste und eine zweite Rahmeneinheit (5, 6), die jeweils mit den entsprechenden Kopplungsteilen (3) der Antriebseinheit (2) auf lösbare Weise gekoppelt sind;
eine Leistungsquelleneinheit (21), die mit der ersten oder der zweiten Rahmeneinheit (5, 6) auf frei befestigbare/lösbare Weise in Eingriff steht und mit einer Batterie zur Zufuhr von elektrischer Leistung zum Aktuator (10) ausgestattet ist;
eine Steuereinheit (11), die in der Antriebseinheit (2) bereitgestellt und dazu ausgestaltet ist, eine Antriebssteuerung des Aktuators (10) durchzuführen;
einen Physikalische-Größe-Detektor (40), der eine physikalische Größe betreffend eine Drehbewegung zwischen dem ersten und dem zweiten Gehäuse (2A, 2B) aus einem dem Aktuator (10) zugeführten Antriebsstrom detektiert;
eine Biosignaldetektionseinheit (41), die ein Biosignal entsprechend Bewegungen eines Gelenks, das eine erste und eine zweite Körperstelle eines Benutzers verbindet, detektiert; und
eine Datenspeichereinheit (39), die einen Referenzparameter von jeder Phase speichert, die eine Sequenz von Mindestbewegungseinheiten ist, welche ein als Aufgabe klassifiziertes Bewegungsmuster des Benutzers darstellt,
wobei in einem Zustand, in dem die Antriebseinheit (2) auf einer seitlichen Seite des Gelenks des Benutzers angeordnet ist, und die erste und die zweite Rahmeneinheit (5, 6) jeweils entsprechend der ersten und zweiten Körperstelle des Benutzers fixiert und zurückgehalten sind,
die Steuereinheit (11): die Aufgabe des Benutzers und die Phase beruhend auf dem in der Datenspeichereinheit (39) abgespeicherten Referenzparameter schätzt, während sie eine Antriebssteuerung durchführt, um zu bewirken, dass der Aktuator (10) eine Bewegungskraft entsprechend der Intention des Benutzers beruhend auf dem durch die Biosignaldetektionseinheit (41) detektierten Biosignal erzeugt, und die Antriebssteuerung einstellt, um den Aktuator (10) zu veranlassen, eine Bewegungskraft entsprechend der Phase zu erzeugen; und
einen mechanischen Widerstand eines Steuergegenstands eines Gesamtsystems, das sich aus der Gesamtvorrichtung und dem Benutzer zusammensetzt, beruhend auf der durch den Physikalische-Größe-Detektor (40) detektierten physikalischen Größe und gemäß der Viskoelastizität des Benutzers und der Schwere des Steuergegenstands des Gesamtsystems kompensiert,
wobei die Antriebseinheit (2) einen Aktuator (10) mit flacher Form, einen Aktuatortreiber (36), der eine Antriebssteuerung des Aktuators (10) durchführt, ein Untersetzungsgetriebe (12), das die Drehgeschwindigkeit eines Rotors für den Aktuator (10) in ein spezifisches Drehzahluntersetzungsverhältnis umwandelt und die umgewandelte Drehgeschwindigkeit ausgibt, und eine einen Berührungssensor (13) umfassende Betriebseinheit (14) mit einer flachen Form aufweist;
wobei ein Hauptkörper des Untersetzungsgetriebes (12) und der Aktuatortreiber (36) in einem aus dem ersten oder dem zweiten Gehäuse (2A, 2B) aufgenommen sind, um im Wesentlichen miteinander bündig zu sein, und die Betriebseinheit (14) auf dem Hauptkörper des Untersetzungsgetriebes (12) fixiert ist, sodass der Aktuator (10) zwischen dem Hauptkörper und der Betriebseinheit (14) angeordnet ist;
und wobei eine Abtriebsachse des Untersetzungsgetriebes (12) auf dem anderen aus dem ersten oder dem zweiten Gehäuse (2A, 2B) fixiert ist.

2. Tragbare Bewegungsunterstützungsvorrichtung (1) nach Anspruch 1,
wobei der Physikalische-Größe-Detektor (40) einen absoluten Winkel, einen Drehwinkel, eine Winkelgeschwindigkeit, eine Winkelbeschleunigung und ein Antriebsmoment zwischen dem ersten und dem zweiten Gehäuse (2A, 2B) als physikalische Größe betreffend die Drehbewegung zwischen dem ersten und dem zweiten Gehäuse (2A, 2B) detektiert.

3. Tragbare Bewegungsunterstützungsvorrichtung (1) nach Anspruch 1 oder 2,
wobei jeder der Kopplungsteile (3) der Antriebseinheit (2) eine Drehwelle entlang einer Richtung vertikal zu einer Abtriebsachse des Untersetzungsgetriebes (12) aufweist und die erste und die zweite Rahmeneinheit (5, 6) mit der Antriebseinheit (2) gekoppelt sind, um frei um die Drehwelle jedes entsprechenden Kopplungsteils (3) rotierbar zu sein.

4. Tragbare Bewegungsunterstützungsvorrichtung (1) nach einem der Ansprüche 1 bis 3,
wobei jede aus der ersten und zweiten Rahmeneinheit (5, 6) und der Leistungsquelleneinheit (21) so ausgebildet ist, dass die Dicke ihres Gehäuses dünner ist als die Dicke des ersten und des zweiten Gehäuses (2A, 2B), welche die Antriebseinheit (2) bilden und miteinander in Eingriff stehen.

5. Tragbare Bewegungsunterstützungsvorrichtung (1) nach einem der Ansprüche 1 bis 4,
wobei eine oder beide aus der ersten und der zweiten Rahmeneinheit (5, 6) in frei erweiterbarer und zusammenziehbarer Weise in einer Kopplungsrichtung in Bezug auf den Kopplungsteil (3) eingestellt werden können.

6. Tragbare Bewegungsunterstützungsvorrichtung (50, 60, 70), umfassend:
eine Antriebseinheit (51, 61) mit einem ersten und einem zweiten Gehäuse (51A, 51B), in denen jeweils eine Statorseite und eine Rotorseite eines Aktuators (10) aufgenommen sind und die miteinander in Eingriff stehen, sodass das erste und das zweite Gehäuse (51A, 15B) getrennt entsprechend dem Antrieb des Aktuators (10) rotieren, wobei ein erster und ein zweiter Kopplungsteil (54A, 54B) ausgebildet sind, um vom ersten und vom zweiten Gehäuse (51A, 51B) jeweils in zueinander entgegengesetzte Richtungen wegzustehen;
eine Rahmeneinheit, die auf lösbare Weise mit dem ersten Kopplungsteil (54A) der Antriebseinheit (51, 61) gekoppelt ist;
eine Kommunikationseinheit (52, 62, 71), die mit dem zweiten Kopplungsteil (54B) der Antriebseinheit (51, 61) gekoppelt ist;
eine Leistungsquelleneinheit (53, 63, 72), die auf der Kommunikationseinheit (52, 62, 71) auf frei lösbare Weise befestigt und damit integriert ist und mit einer Batterie zur Zufuhr von elektrischer Leistung zum Aktuator (10) ausgestattet ist;
eine Steuereinheit (11), die in der Antriebseinheit (51, 61) bereitgestellt und dazu ausgestaltet ist, eine Antriebssteuerung des Aktuators (10) durchzuführen;
einen Physikalische-Größe-Detektor (40), der eine physikalische Größe betreffend eine Drehbewegung zwischen dem ersten und dem zweiten Gehäuse (51A, 51B) aus einem dem Aktuator (10) zugeführten Antriebsstrom detektiert;
eine Biosignaldetektionseinheit (41), die ein Biosignal entsprechend Bewegungen eines Gelenks, das eine erste und eine zweite Körperstelle eines Benutzers verbindet, detektiert; und
eine Datenspeichereinheit (39), die einen Referenzparameter von jeder Phase speichert, die eine Sequenz von Mindestbewegungseinheiten ist, welche ein als Aufgabe klassifiziertes Bewegungsmuster des Benutzers darstellt,
wobei in einem Zustand, in dem die Antriebseinheit (51, 61) auf einer seitlichen Seite des Gelenks des Benutzers angeordnet ist und die Kommunikationseinheit (52, 62, 71) und die Rahmeneinheit jeweils entsprechend der ersten und zweiten Körperstelle des Benutzers fixiert und zurückgehalten sind,
die Steuereinheit (11): die Aufgabe des Benutzers und die Phase beruhend auf dem in der Datenspeichereinheit (39) abgespeicherten Referenzparameter schätzt, während sie eine Antriebssteuerung durchführt, um zu bewirken, dass der Aktuator (10) eine Bewegungskraft entsprechend der Intention des Benutzers beruhend auf dem durch die Biosignaldetektionseinheit (41) detektierten Biosignal erzeugt, und die Antriebssteuerung einstellt, um den Aktuator (10) zu veranlassen, eine Bewegungskraft entsprechend der Phase zu erzeugen; und
einen mechanischen Widerstand eines Steuergegenstands eines Gesamtsystems, das sich aus der Gesamtvorrichtung und dem Benutzer zusammensetzt, beruhend auf der durch die Physikalische-Größe-Detektor (40) detektierten physikalischen Größe und gemäß der Viskoelastizität des Benutzers und der Schwere des Steuergegenstands des Gesamtsystems kompensiert,
wobei die Antriebseinheit (51, 61) einen Aktuator (10) mit flacher Form, einen Aktuatortreiber (36), der eine Antriebssteuerung des Aktuators (10) durchführt, ein Untersetzungsgetriebe (12), das die Drehgeschwindigkeit eines Rotors für den Aktuator (10) in ein spezifisches Drehzahluntersetzungsverhältnis umwandelt und die umgewandelte Drehgeschwindigkeit ausgibt, und eine einen Berührungssensor (13) umfassende Betriebseinheit (14) mit einer flachen Form aufweist;
wobei ein Hauptkörper des Untersetzungsgetriebes (12) und der Aktuatortreiber (36) in einem aus dem ersten oder dem zweiten Gehäuse (51A, 51B) aufgenommen sind, um im Wesentlichen miteinander bündig zu sein, und die Betriebseinheit (14) auf dem Hauptkörper des Untersetzungsgetriebes (12) fixiert ist, sodass der Aktuator (10) zwischen dem Hauptkörper und der Betriebseinheit (14) angeordnet ist;
und wobei eine Abtriebsachse des Untersetzungsgetriebes (12) auf dem anderen aus dem ersten oder dem zweiten Gehäuse (51A, 51B) fixiert ist.

7. Tragbare Bewegungsunterstützungsvorrichtung (50, 60, 70) nach Anspruch 6,
wobei der Physikalische-Größe-Detektor (40) einen absoluten Winkel, einen Drehwinkel, eine Winkelgeschwindigkeit, eine Winkelbeschleunigung und ein Antriebsmoment zwischen dem ersten und dem zweiten Gehäuse (51A, 51B) als physikalische Größe betreffend die Drehbewegung zwischen dem ersten und dem zweiten Gehäuse (51A, 51B) detektiert.

8. Tragbare Bewegungsunterstützungsvorrichtung (50, 60, 70) nach Anspruch 6 oder 7,
wobei der erste und der zweite Kopplungsteil (54A, 54B) der Antriebseinheit (51, 61) Drehwellen entlang einer Richtung vertikal zu einer Abtriebsachse des Untersetzungsgetriebes (12) aufweisen und die Rahmeneinheit und die Kommunikationseinheit (52, 62, 71) mit der Antriebseinheit (51, 61) gekoppelt sind, um frei um die Drehwellen des ersten und des zweiten Kopplungsteils (54A, 54B) rotierbar zu sein.

9. Tragbare Bewegungsunterstützungsvorrichtung (50, 60, 70) nach einem der Ansprüche 6 bis 8, wobei jeder aus der Rahmeneinheit, der Kommunikationseinheit (52, 62, 71) und der Leistungsquelleneinheit (53, 63, 72) so ausgebildet ist, dass die Dicke ihres Gehäuses dünner ist als die Dicke des ersten und des zweiten Gehäuses (51A, 51B, welche die Antriebseinheit (51, 61) bilden und miteinander in Eingriff stehen.

10. Tragbare Bewegungsunterstützungsvorrichtung (50, 60, 70) nach einem der Ansprüche 6 bis 9, wobei die Rahmeneinheit in frei erweiterbarer und zusammenziehbarer Weise in einer Kopplungsrichtung in Bezug auf den Kopplungsteil (54A) eingestellt werden kann.

## Revendications

1. Dispositif portable d'assistance au mouvement (1) comprenant :
une unité d'entraînement (2) ayant des premier et deuxième logements (2A, 2B) dans lesquels un côté stator et un côté rotor d'un actionneur (10) sont respectivement logés et qui sont en prises l'un avec l'autre de telle sorte que les premier et deuxième logements (2A, 2B) tournent séparément selon l'entraînement de l'actionneur (10), dans lequel des parties de couplage (3) de la même structure sont formées pour faire saillie à partir des premier et deuxième logements (2A, 2B) respectivement dans des directions mutuellement opposées ;
des première et deuxième unités de cadre (5, 6) qui sont respectivement couplées aux parties de couplage (3) respectives de l'unité d'entraînement (2) de manière séparable ;
une unité de source d'énergie (21) qui se met en prise avec la première ou la deuxième unité de cadre (5, 6) d'une manière librement attachable/détachable et est équipée d'une batterie pour fournir de l'énergie électrique à l'actionneur (10) ;
une unité de commande (11) disposée dans l'unité d'entraînement (2) et conçue pour réaliser la commande d'entraînement de l'actionneur (10) ;
un détecteur de quantité physique (40) qui détecte une quantité physique en ce qui concerne un mouvement rotatif entre les premier et deuxième logements (2A, 2B) à partir d'un courant d'entraînement fourni à l'actionneur (10) ;
une unité de détection de biosignal (41) qui détecte un biosignal selon les mouvements d'une articulation reliant des premier et deuxième sites corporels d'un porteur ; et
une unité de mémoire (39) qui mémorise un paramètre de référence de chaque phase qui est une séquence d'unités de mouvement minimum qui constituent un schéma de mouvement du porteur classifié en tant que tâche,
dans lequel dans un état où l'unité d'entraînement (2) est située sur un côté latéral de l'articulation du porteur et les première et deuxième unités de cadre (5, 6) sont fixées et maintenues en correspondance avec les premier et deuxième sites corporels du porteur, respectivement,
l'unité de commande (11) : estime la tâche et la phase du porteur sur la base du paramètre de référence mémorisé dans l'unité de mémoire (39) tout en réalisant la commande d'entraînement pour amener l'actionneur (10) à générer une force motrice selon l'intention du porteur sur la base du biosignal détecté par l'unité de détection de biosignal (41), et ajuste la commande d'entraînement pour amener l'actionneur (10) à générer la force motrice selon la phase ; et
compense l'impédance mécanique d'un objet de commande d'un système entier composé du dispositif entier et du porteur sur la base de la quantité physique détectée par le détecteur de quantité physique (40) et selon la viscoélasticité du porteur et la pesanteur de l'objet de commande du système entier,
dans lequel l'unité d'entraînement (2) présente un actionneur de forme plate (10), un entraîneur d'actionneur (36) qui réalise la commande d'entraînement de l'actionneur (10), un réducteur de vitesse (12) qui convertit une vitesse de rotation d'un rotor pour l'actionneur (10) en un rapport de réduction de vitesse spécifié et délivre en sortie la vitesse de rotation convertie, et une unité de fonctionnement de forme plate (14) incluant un capteur tactile (13) ;
dans lequel un corps principal du réducteur de vitesse (12) et l'entraîneur d'actionneur (36) sont logés dans l'un ou l'autre du premier ou du deuxième logement (2A, 2B) pour être sensiblement en affleurement l'un avec l'autre et l'unité de fonctionnement (14) est fixée au corps principal du réducteur de vitesse (12) de telle sorte que l'actionneur (10) est situé entre le corps principal et l'unité de fonctionnement (14) ;
et dans lequel un axe de sortie du réducteur de vitesse (12) est fixé à l'autre du premier ou du deuxième logement (2A, 2B).

2. Dispositif portable d'assistance au mouvement (1) selon la revendication 1,
dans lequel le détecteur de quantité physique (40) détecte un angle absolu, un angle de rotation, une vitesse angulaire, une accélération angulaire et un couple d'entraînement entre les premier et deuxième logements (2A, 2B) en tant que quantité physique en ce qui concerne le mouvement rotatif entre les premier et deuxième logements (2A, 2B).

3. Dispositif portable d'assistance au mouvement (1) selon la revendication 1 ou 2,
dans lequel chacune des parties de couplage (3) de l'unité d'entraînement (2) a un arbre rotatif le long d'une direction verticale à un axe de sortie du réducteur de vitesse (12) et les première et deuxième unités de cadre (5, 6) sont couplées à l'unité d'entraînement (2) de sorte à pouvoir tourner librement autour de l'arbre rotatif de chaque partie de couplage (3) correspondante.

4. Dispositif portable d'assistance au mouvement (1) selon l'une quelconque des revendications 1 à 3,
dans lequel chacune des première et deuxième unités de cadre (5, 6) et de l'unité de source d'énergie (21) est formée de telle sorte qu'une épaisseur de son logement est plus mince qu'une épaisseur des premier et deuxième logements (2A, 2B) qui constituent l'unité d'entraînement (2) et se mettent en prise l'une avec l'autre.

5. Dispositif portable d'assistance au mouvement (1) selon l'une quelconque des revendications 1 à 4,
dans lequel l'une ou l'autre ou les deux des première et deuxième unités de cadre (5, 6) peuvent être ajustées d'une manière librement extensible et contractible dans une direction de couplage à la partie de couplage (3).

6. Dispositif portable d'assistance au mouvement (50, 60, 70) comprenant :
une unité d'entraînement (51, 61) ayant des premier et deuxième logements (51A, 51B) dans lesquels un côté stator et un côté rotor d'un actionneur (10) sont respectivement logés et qui se mettent en prise l'un avec l'autre de telle sorte que les premier et deuxième logements (51A, 51B) tournent séparément selon l'entraînement de l'actionneur (10), dans lequel des première et deuxième parties de couplage (54A, 54B) sont formées pour faire saillie à partir des premier et deuxième logements (51A, 51B) respectivement dans des directions mutuellement opposées ;
une unité de cadre qui est couplée à la première partie de couplage (54A) de l'unité d'entraînement (51, 61) de manière séparable ;
une unité de communication (52, 62, 71) qui est couplée à la deuxième partie de couplage (54B) de l'unité d'entraînement (51, 61) ;
une unité de source d'énergie (53, 63, 72) qui est fixée à et solidaire de l'unité de communication (52, 62, 71) de manière librement détachable et est équipée d'une batterie pour fournir de l'énergie électrique à l'actionneur (10) ;
une unité de commande (11) disposée dans l'unité d'entraînement (51, 61) et conçue pour réaliser la commande d'entraînement de l'actionneur (10) ;
un détecteur de quantité physique (40) qui détecte une quantité physique en ce qui concerne un mouvement rotatif entre les premier et deuxième logements (51A, 51B) à partir d'un courant d'entraînement fourni à l'actionneur (10) ;
une unité de détection de biosignal (41) qui détecte un biosignal selon les mouvements d'une articulation reliant des premier et deuxième sites corporels d'un porteur ; et
une unité de mémoire (39) qui mémorise un paramètre de référence de chaque phase qui est une séquence d'unités de mouvement minimum qui constituent un schéma de mouvement du porteur classifié en tant que tâche,
dans lequel dans un état où l'unité d'entraînement (51, 61) est située sur un côté latéral de l'articulation du porteur et l'unité de communication (52, 62, 71) et l'unité de cadre sont fixées et maintenues en correspondance avec les premier et deuxième sites corporels du porteur, respectivement,
l'unité de commande (11) : estime la tâche et la phase du porteur sur la base des paramètres de référence mémorisés dans l'unité de mémoire (39) tout en réalisant la commande d'entraînement pour amener l'actionneur (10) à générer une force motrice selon l'intention du porteur sur la base du biosignal détecté par l'unité de détection de biosignal (41), et ajuste la commande d'entraînement pour amener l'actionneur (10) à générer la force motrice selon la phase ; et
compense l'impédance mécanique d'un objet de commande d'un système entier composé du dispositif entier et du porteur sur la base de la quantité physique détectée par le détecteur de quantité physique (40) et selon la viscoélasticité du porteur et la pesanteur de l'objet de commande du système entier,
dans lequel l'unité d'entraînement (51, 61) a un actionneur de forme plate (10), un entraîneur d'actionneur (36) qui réalise la commande d'entraînement de l'actionneur (10), un réducteur de vitesse (12) qui convertit une vitesse de rotation d'un rotor pour l'actionneur (10) en un rapport de réduction de vitesse spécifié et délivre en sortie la vitesse de rotation convertie, et une unité de fonctionnement de forme plate (14) incluant un capteur tactile (13) ;
dans lequel un corps principal du réducteur de vitesse (12) et l'entraîneur d'actionneur (36) sont logés dans l'un ou l'autre du premier ou du deuxième logement (51A, 51B) pour être sensiblement en affleurement l'un avec l'autre et l'unité de fonctionnement (14) est fixée au corps principal du réducteur de vitesse (12) de telle sorte que l'actionneur (10) est situé entre le corps principal et l'unité de fonctionnement (14) ;
et dans lequel un axe de sortie du réducteur de vitesse (12) est fixé à l'autre du premier ou du deuxième logement (51A, 51B).

7. Dispositif portable d'assistance au mouvement (50, 60, 70) selon la revendication 6,
dans lequel le détecteur de quantité physique (40) détecte un angle absolu, un angle de rotation, une vitesse angulaire, une accélération angulaire et un couple d'entraînement entre les premier et deuxième logements (51A, 51B) en tant que quantité physique en ce qui concerne le mouvement rotatif entre les premier et deuxième logements (51A, 51B).

8. Dispositif portable d'assistance au mouvement (50, 60, 70) selon la revendication 6 ou 7,
dans lequel les première et deuxième parties de couplage (54A, 54B) de l'unité d'entraînement (51, 61) ont des arbres rotatifs le long d'une direction verticale à un axe de sortie du réducteur de vitesse (12) et l'unité de cadre et l'unité de communication (52, 62, 71) sont couplées à l'unité d'entraînement (51, 61) de sorte à pouvoir tourner librement autour des arbres rotatifs des première et deuxième parties de couplage (54A, 54B).

9. Dispositif portable d'assistance au mouvement (50, 60, 70) selon l'une quelconque des revendications 6 à 8,
dans lequel chacune de l'unité de cadre, de l'unité de communication (52, 62, 71) et de l'unité de source d'énergie (53, 63, 72) est formée de telle sorte qu'une épaisseur de son logement est plus mince qu'une épaisseur des premier et deuxième logements (51A, 51B) qui constituent l'unité d'entraînement (51, 61) et se mettent en prise les unes avec les autres.

10. Dispositif portable d'assistance au mouvement (50, 60, 70) selon l'une quelconque des revendications 6 à 9,
dans lequel l'unité de cadre peut être ajustée de manière librement extensible et contractible dans une direction de couplage à la première partie de couplage (54A).
